# EUROPEAN PATENT SPECIFICATION

(11) **EP 4 318 032 B1**
(45) Date of publication and mention of the grant of the patent: **02.12.2026**
(21) Application number: 21933171.7
(22) Date of filing: 16.07.2021
(51) Int. Cl.: G01S 7/497, G01S 7/484, G01S 7/486, G01S 17/18, G01S 17/894

(54) **DETECTION DEVICE, DETECTION PROGRAM, STORAGE MEDIUM, DETECTION METHOD, AND LIGHT EMISSION DEVICE**
DETEKTIONSVORRICHTUNG, DETEKTIONSPROGRAMM, SPEICHERMEDIUM, DETEKTIONSVERFAHREN UND LICHTEMISSIONSVORRICHTUNG
DISPOSITIF DE DÉTECTION, PROGRAMME DE DÉTECTION, SUPPORT DE STOCKAGE, PROCÉDÉ DE DÉTECTION ET DISPOSITIF D'ÉMISSION DE LUMIÈRE

(30) Priority: 25.03.2021 JP 2021051646
(43) Date of publication of application: 07.02.2024
(73) Proprietor: Fujifilm Business Innovation Corp., Tokyo 107-0052 (JP)
(72) Inventor: IGUCHI Daisuke, Ebina-shi, Kanagawa 243-0494 (JP); KONDO Takashi, Ebina-shi, Kanagawa 243-0494 (JP); SAKITA Tomoaki, Ebina-shi, Kanagawa 243-0494 (JP)
(74) Representative: Haseltine Lake Kempner LLP
(86) International application number: PCT/JP2021/026849
(87) International publication number: WO 2022/201570

(56) References cited:
- JP-A- 2005 064 000
- JP-A- 2010 025 906
- JP-A- 2018 006 137
- JP-A- 2019 138 805
- US-A1- 2019 310 375
- US-A1- 2020 209 358
- US-A1- 2020 249 318
- US-A1- 2020 333 438

## Description

### Technical Field

The present invention relates to detection devices, detection methods, detection programs, and a storage medium.

### Background Art

PTL 1 discloses a method of measuring a depth, the method being non-reactive to broken light caused by internal reflection and including: emitting light to a scene by a light source; performing broken light measurement by controlling a first electric charge storage unit of a pixel so as to collect electric charges based on light to which the pixel is exposed during a first period in which the pixel is exposed to broken light, but is not exposed to return light from an object within the field of view of the pixel; removing contribution by the broken light from one or more measurements affected by the broken light based on the broken light measurement; and determining the depth based on the one or more measurements with the contribution by the broken light removed.

PTL 2 discloses a distance measuring device including: a light projector that projects light to an object; a light receiver that receives light reflected or scattered by the object; a scanner that scans a scanning area with the light projected from the light projector; and a distance measuring unit that measures the distance to the object by measuring the time from light projection by the light projector to light receiving by the light receiver, and it is determined whether a measurement value of a first division area can be regarded as a measurement result of the first division area based on the measurement value of the first division area, measured by the measuring unit, and the measurement value of a second division area, measured earlier than the measurement value of the first division area during a one scan, and when the measurement value is determined to be regarded as the measurement result of the first division area, the measurement value of the first division area is output as the distance to the object in the first division area, the one scan being defined as scanning from a scan start of one of a plurality of division areas to a scan end of all the division areas, into which the scanning area is divided.

PTL 3 discloses a light flight distance measurement device including: a first light source that emits first light to a first light emission space; a light receiver that has a plurality of pixels and receives light by the pixels; a range image acquisition unit that, for each of the pixels, acquires a range image indicating the distance from the distance measurement device to an object by the light receiver receiving light including first reflection light in which the first light is reflected by the surface of the object in a light emission period in which the first light is repeatedly emitted from the first light source; a brightness value image acquisition unit that acquires a brightness value image indicating a brightness value of each of the pixels by the light receiver receiving light including second reflection light in which second light is reflected by the surface of the object in a non-light emission period in which the first light is not repeatedly emitted from the first light source, the second light being emitted from a second light source to a second light emission space including at least part of the first light emission space along an optical axis different from that of the first light; and a multi-path detector that detects an area where a multi-path occurs using the range image and the brightness value image.

PTL 4 discloses a distance measuring device including a light emitter that emits exploration light, and a light receiver that receives reflection light of the exploration light and being configured to measure the distance to an object which has reflected the exploration light, based on the reflection light received by the light receiver. In the distance measuring device, the light receiver is installed at a position away from a strong scattering region which is centered on the light emitter and in which the intensity of scattered light has a magnitude exceeding the noise level of the light receiver, the scattered light being produced by the exploration light passing through drops of water having a diameter larger than the wavelength of the exploration light or the exploration light being reflected by the drops of water, and the distance measuring device is provided with a light shielding unit that shields part of the scattered light, the part being convergence scattered light that converges in a specific direction and scattered light to be incident on the light receiver at an incidence angle greater than that of the convergence scattered light.

### Citation List

### Patent Literature

PTL 1: Japanese Unexamined Patent Application Publication No. 2019-219400
PTL 2: Japanese Unexamined Patent Application Publication No. 2019-028039
PTL 3: Japanese Unexamined Patent Application Publication No. 2017-15448
PTL 4: Japanese Unexamined Patent Application Publication No. 2007-333592 Finally, US 2020 / 0 249 318 A1 describes a method for making flash LIDAR systems more power-efficient by implementing strobe window dependent illumination. US 2019 / 0 310 375 A1 describes a LIDAR system that implements zonal automatic gain control by adaptively adjusting the output power of its light emitters based on feedback from its light detectors. US 2020 / 0 333 438 A1 describes a driver circuit design that generates very short, high-power electrical pulses for optical loads like lasers, primarily by harnessing parasitic inductance rather than trying to eliminate it.

### Summary of Invention

### Technical Problem

The embodiments of the present disclosure relate to providing detection devices, detection methods detection programs, and a storage medium that, upon detection of an object to be detected by detecting reflected light of light emitted from a light emitting element array including a plurality of light emitting elements to the object to be detected, are capable of reducing the effect of a change in rise characteristics of light emission even when a change occurs in the arrangement of the light emitting elements to be caused to emit light, as compared to when the effect of a change in the arrangement of the light emitting elements to be caused to emit light is not taken into consideration.

### Solution to Problem

[1] According to an aspect of the present disclosure, a detection device comprises:
   a light emitting element array including a plurality of light emission sections, each light emission section comprising a plurality of light emitting elements;
   a light receiving element array including a plurality of light receiving elements that receive reflected light of light emitted from the light emitting element array to an object to be detected;
   a driver that drives the light emission sections; and
   a detector that detects the object to be detected, the detector having a processor operable to control at least one of a supply timing t1 of a drive current to the light emission sections to be caused to emit light and a light receiving timing t3 of the light receiving elements,
   wherein, when an amount of light emitted by each light emission section to be caused to emit light is maintained to be unchanged regardless of a change in number of the light emission sections to be caused to emit light, either
      the detector controls the supply timing t1 so that, as the number of the light emission sections24 to be caused to emit light increases, the supply timing t1' is advanced, so that a time from a start of light emission t2 of the light emission sections to be caused to emit light to the light receiving timing t3 of the light receiving elements falls within a predetermined range even when a change occurs in an arrangement of the light emission sections to be caused to emit light, so that change is prevented in the time from the light emission start (t2) of the light emission sections (24) to the light receiving timing (t3), and/or
      the detector controls the light receiving timing t3 so that, as the number of the light emission sections to be caused to emit light increases, the light receiving timing t3' is delayed so that a time from a start of light emission t2 of the light emission sections to be caused to emit light to the light receiving timing t3' of the light receiving elements falls within a predetermined range even when a change occurs in an arrangement of the light emission sections to be caused to emit light, so that change is prevented in the time from the light emission start (t2) of the light emission sections (24) to the light receiving timing (t3').
[2] According to another aspect of the present disclosure, a detection device comprises:
   a light emitting element array including a plurality of light emission sections, each light emission section comprising a plurality of light emitting elements;
   a light receiving element array including a plurality of light receiving elements that receive reflected light of light emitted from the light emitting element array to an object to be detected;
   a driver that drives the light emission sections; and
   a detector that detects the object to be detected, the detector having a processor operable to control at least one of a supply timing t1 of a drive current to the light emission sections to be caused to emit light and a light receiving timing of the light receiving elements,
   wherein when a total amount of light emitted by the light emission sections to be caused to emit light is maintained to be unchanged, regardless of a change in number of the light emission sections to be caused to emit light, the detector controls at least one of the supply timing t1 and the light receiving timing t3 which are determined based on an inductance of a current path for a drive current which flows through the light emission sections to be caused to emit light,
   wherein the detector controls the supply timing t1 so that, as the number of the light emission sections to be caused to emit light decreases, the supply timing t1' is advanced, so that a time from a start of light emission t2 of the light emission sections to be caused to emit light to the light receiving timing t3 of the light receiving elements falls within a predetermined range even when a change occurs in an arrangement of the light emission sections to be caused to emit light, so that change is prevented in the time from the light emission start (t2) of the light emission sections (24) to the light receiving timing (t3), and/or
   the detector controls the timing of light receiving so that, as the number of the light emission sections to be caused to emit light decreases, the light receiving timing t3' is delayed, so that a time from a start of light emission t2 of the light emission sections to be caused to emit light to the light receiving timing t3' of the light receiving elements falls within a predetermined range even when a change occurs in an arrangement of the light emission sections to be caused to emit light, so that change is prevented in the time from the light emission start (t2) of the light emission sections (24) to the light receiving timing (t3').
[3] In the detection device according to [1] or [2], the detector may detect a distance from the detection device to the object to be detected by a time of flight.
[4] According to another aspect of the present disclosure, a detection method for detecting an object to be detected comprises:
   controlling light emission of a plurality of light emission sections, each light emission section comprising a plurality of light emitting elements, included in a light emitting element array; and
   detecting the object to be detected while controlling at least one of a supply timing t1 of a drive current to the light emissions sections to be caused to emit light and a light receiving timing t3 of a plurality of light receiving elements included in a light receiving element array,
   wherein when an amount of light emitted by each light emission sections to be caused to emit light is maintained to be unchanged, regardless of a change in number of the light emission sections to be caused to emit light, either
      the supply timing t1 is controlled so that as the number of the light emission sections to be caused to emit light increases, the supply timing t1' is advanced, so that a time from a start of light emission t2 of the light emission sections to be caused to emit light to the light receiving timing t3 of the light receiving elements falls within a predetermined range even when a change occurs in an arrangement of the light emission sections to be caused to emit light, so that change is prevented in the time from the light emission start (t2) of the light emission sections (24) to the light receiving timing (t3), and/or
      the light receiving timing t3 is controlled so that as the number of the light emission sections to be caused to emit light increases, the light receiving timing t3' is delayed, so that a time from a start of light emission t2 of the light emission sections to be caused to emit light to the light receiving timing t3' of the light receiving elements falls within a predetermined range even when a change occurs in an arrangement of the light emission sections to be caused to emit light, so that change is prevented in the time from the light emission start (t2) of the light emission sections (24) to the light receiving timing (t3').
[5] According to another aspect of the present disclosure, a detection method for detecting an object to be detected comprises:
   controlling light emission of a plurality of light emission sections, each light emission section comprising a plurality of light emitting elements included in a light emitting element array; and
   detecting the object to be detected while controlling at least one of a supply timing t1 of a drive current to the light emission sections to be caused to emit light and a light receiving timing t3 of light receiving elements included in a light receiving element array,
   wherein when a total amount of light emitted by the light emission sections 24 to be caused to emit light is maintained to be unchanged, regardless of a change in number of the light emission sections 24 to be caused to emit light, at least one of the supply timing t1 and the light receiving timing t3, which are determined based on an inductance of a current path for a drive current which flows through the light emission sections 24 to be caused to emit light, are controlled, wherein either
      the supply timing t1 is controlled so that as the number of the light emission sections to be caused to emit light decreases, the supply timing t1' is advanced, so that a time from a start of light emission t2 of the light emission sections to be caused to emit light to the light receiving timing t3 of the light receiving elements falls within a predetermined range even when a change occurs in an arrangement of the light emission sections to be caused to emit light, so that change is prevented in the time from the light emission start (t2) of the light emission sections (24) to the light receiving timing (t3), and/or
      the timing of light receiving is controlled so that as the number of the light emission sections to be caused to emit light decreases, the light receiving timing t3' is delayed, so that a time from a start of light emission t2 of the light emission sections to be caused to emit light to the light receiving timing t3' of the light receiving elements falls within a predetermined range even when a change occurs in an arrangement of the light emission sections to be caused to emit light, so that change is prevented in the time from the light emission start (t2) of the light emission sections (24) to the light receiving timing (t3').
[6] According to another aspect of the present disclosure, a detection program, when executed by the processor of the detection device of [1], causes the detection device to perform the detection method of [4].
[7] According to another aspect of the present disclosure, a detection program, when executed by the processor of the detection device of [2], causes the detection device to perform the detection method of [5].
[8] According to another aspect of the present disclosure, a storage medium stores a detection program according to [6] or [7].

### Brief Description of Drawings

[Fig. 1] Fig. 1 is a schematic configuration view illustrating the configuration of a measuring device according to a first exemplary embodiment.
[Fig. 2] Fig. 2 is a block diagram illustrating the major configuration of an electric system of the measuring device.
[Fig. 3] Fig. 3 is a plan view of a light source.
[Fig. 4] Fig. 4 is a view for illustrating a light emission section.
[Fig. 5] Fig. 5 is a circuit diagram of the measuring device.
[Fig. 6] Fig. 6 is a plan view of a 3D sensor.
[Fig. 7] Fig. 7 is a flowchart illustrating an example of a process flow of a measurement program according to the first exemplary embodiment.
[Fig. 8A] Fig. 8A is a timing chart for illustrating a supply timing of a drive current when the number of first light emission sections is one.
[Fig. 8B] Fig. 8B is a timing chart for illustrating a supply timing of a drive current when the number of first light emission sections is 12.
[Fig. 9A] Fig. 9A is a timing chart for illustrating a light receiving timing when the number of first light emission sections is one.
[Fig. 9B] Fig. 9B is a timing chart for illustrating a light receiving timing when the number of first light emission sections is 12.
[Fig. 10] Fig. 10 is a plan view of the 3D sensor.
[Fig. 11] Fig. 11 is a view for illustrating a multi-path.
[Fig. 12] Fig. 12 is a view for illustrating a multi-path.
[Fig. 13] Fig. 13 is a flowchart illustrating an example of a process flow of a measurement program according to a second exemplary embodiment.
[Fig. 14A] Fig. 14A is a timing chart for illustrating another example of a supply timing of a drive current when the number of light emission sections to be caused to emit light is 12.
[Fig. 14B] Fig. 14B is a timing chart for illustrating another example of a supply timing of a drive current when the number of light emission sections to be caused to emit light is one.
[Fig. 15A] Fig. 15A is a timing chart for illustrating another example of a light receiving timing when the number of light emission sections to be caused to emit light is 12.
[Fig. 15B] Fig. 15B is a timing chart for illustrating another example of a light receiving timing when the number of light emission sections to be caused to emit light is one.
[Fig. 16A] Fig. 16A is a timing chart for illustrating another example of a supply timing of a drive current when current value Jp is high.
[Fig. 16B] Fig. 16B is a timing chart for illustrating another example of a supply timing of a drive current when current value Jp is low.
[Fig. 17A] Fig. 17A is a timing chart for illustrating another example of a light receiving timing when current value Jp is high.
[Fig. 17B] Fig. 17B is a timing chart for illustrating another example of a light receiving timing when current value Jp is low.

### Description of Embodiments

Hereinafter, an exemplary embodiment according to the disclosed technique will be described in detail with reference to the drawings.

### <First Exemplary Embodiment>

Measuring devices that measure the three-dimensional shape of a to-be-measured object includes a measuring device that measures the three-dimensional shape of a to-be-measured object based on flight time of light, so-called a ToF (Time of Flight) method. In the ToF method, the time from a timing when light is emitted by a light source of the measuring device to a timing when radiated light is reflected by a to-be-measured object and received by a three-dimensional sensor (hereinafter denoted as a 3D sensor) of the measuring device is measured, thus the three-dimensional shape is identified by measuring the distance from the measuring device to the to-be-measured object. Note that an object for which the three-dimensional shape is measured is referred to as a to-be-measured object. The to-be-measured object is an example of an object to be detected. In addition, measuring a three-dimensional shape may be referred to as three-dimensional measurement, 3D measurement or 3D sensing.

The ToF method includes a direct method and a phase difference method (indirect method). The direct method is a method in which a pulsed light that is caused to emit only for an extremely short time is radiated to a to-be-measured object, and the time until the light returns is measured. The phase difference method is a method in which a pulsed light is periodically flashed, and the time delay when a plurality of beams of pulsed light shuttle between a light source and a to-be-measured object is detected as the phase difference. In this exemplary embodiment, a description will be given when a three-dimensional shape is measured by the phase difference method.

Such a measuring device is installed in e.g., a mobile information processing device, and utilized for face recognition of a user who tries to access it. Conventionally, a method of authenticating a user by password, fingerprint, or iris has been used for mobile information processing devices. In recent years, authentication methods having higher security have been demanded. Thus, mobile information processing devices have started to be equipped with a measuring device that measures a three-dimensional shape. Specifically, in a mobile information processing device equipped with a measuring device, the three-dimensional image of the face of a user who has made access is obtained, whether access is allowed is identified, and only when the user is authenticated and allowed to access the device (the mobile information processing device), the device is allowed to be used.

Such a measuring device is also used when the three-dimensional shape of a to-be-measured object is continuously measured, for example, in Augmented Reality (AR).

The configuration, function, and method explained in the exemplary embodiment described below are also applicable to not only face recognition and augmented reality, but also measurement of the three-dimensional shapes of other to-be-measured objects.

### (Measuring Device 1)

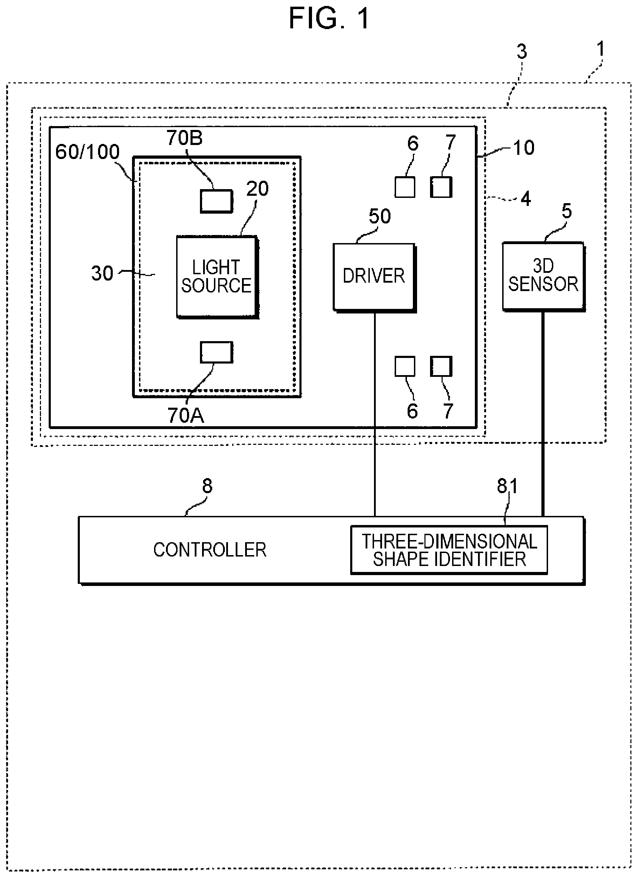

Fig. 1 is a block diagram illustrating an example of a configuration of a measuring device 1 that measures a three-dimensional shape.

The measuring device 1 includes an optical device 3 and a controller 8. The controller 8 controls the optical device 3. The controller 8 includes a three-dimensional shape identifier 81 that identifies the three-dimensional shape of a to-be-measured object. The measuring device 1 is an example of a detection device. Also, the controller 8 is an example of a detector.

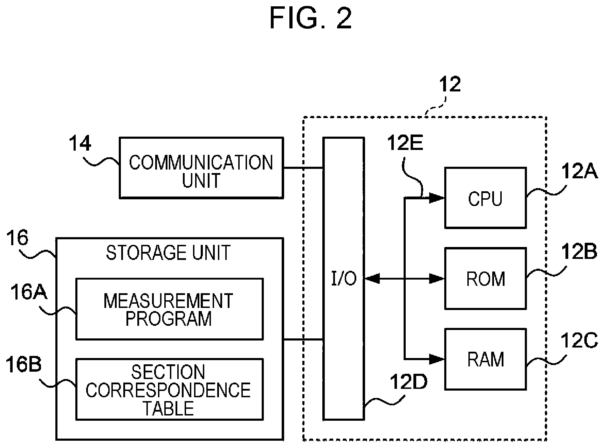

Fig. 2 is a block diagram illustrating the hardware configuration of the controller 8. As illustrated in Fig. 2, the controller 8 includes a controller 12. The controller 12 includes a central processing unit (CPU) 12A, a read only memory (ROM) 12B, a random access memory (RAM) 12C, and an input and output interface (I/O) 12D. The controller 12 includes a CPU (Central Processing Unit) 12A, a ROM (Read Only Memory) 12B, a RAM (Random Access Memory) 12C, and an input and output interface (I/O) 12D. The CPU 12A, the ROM 12B, the RAM 12C, and the I/O 12D are connected to each other via a system bus 12E. The system bus 12E includes a control bus, an address bus, and a data bus.

In addition, the I/O 12D is connected to a communication unit 14 and a storage unit 16.

The communication unit 14 is an interface to perform data communication with an external device.

The storage unit 16 is comprised of a non-volatile rewritable memory such as a flash ROM, and stores the later-described measurement program 16A and the later-described section correspondence table 16B. The three-dimensional shape identifier 81 is implemented by the CPU 12A reading in the RAM 12C and executing the measurement program 16A stored in the storage unit 16, and the three-dimensional shape of a to-be-measured object is identified. Note that the measurement program 16A is an example of a detection program.

The optical device 3 includes a light emitting device 4 and a 3D sensor 5. The light emitting device 4 includes a wiring substrate 10, a heat dissipation base 100, a light source 20, a light diffusion member 30, a driver 50, a retainer 60, and capacitors 70A, 70B. The light emitting device 4 may include passive components such as a resistance element 6, a capacitor 7 to cause the driver 50 to operate. Herein, the light emitting device 4 includes two resistance elements 6 and two capacitors 7. Although two capacitors 70A, 70B are denoted, one capacitor may be provided instead. Note that when the capacitors 70A, 70B are not distinguished, they are denoted as capacitors 70. Furthermore, the number of resistance elements 6 and capacitors 7 may be one each, or may be plural. Herein, electrical components, such as the 3D sensor 5, the resistance element 6, and the capacitors 7 other than the light source 20, the driver 50 and the capacitors 70 may be referred to as circuit components without being distinguished. Note that a capacitor may be called a condenser. The 3D sensor 5 is an example of a light receiving element array.

The heat dissipation base 100, the driver 50, the resistance element 6 and the capacitor 7 of the light emitting device 4 are provided on the surface of the wiring substrate 10. Note that the 3D sensor 5 is not provided on the front surface of the wiring substrate 10 in Fig. 1, but may be provided on the front surface of the wiring substrate 10.

The light source 20, the capacitors 70A, 70B and the retainer 60 are provided on the front surface of the heat dissipation base 100. The light diffusion member 30 is provided on the retainer 60. Herein, the external shape of the heat dissipation base 100 and the external shape of the light diffusion member 30 are the same. Here, the front surface refers to the front side of the paper surface of Fig. 1. More specifically, in the wiring substrate 10, the face provided with the heat dissipation base 100 is referred to as the front surface, front side, or front surface side. In addition, in the wiring substrate 10, the face provided with the light source 20 is referred to as the front surface, front side, or front surface side.

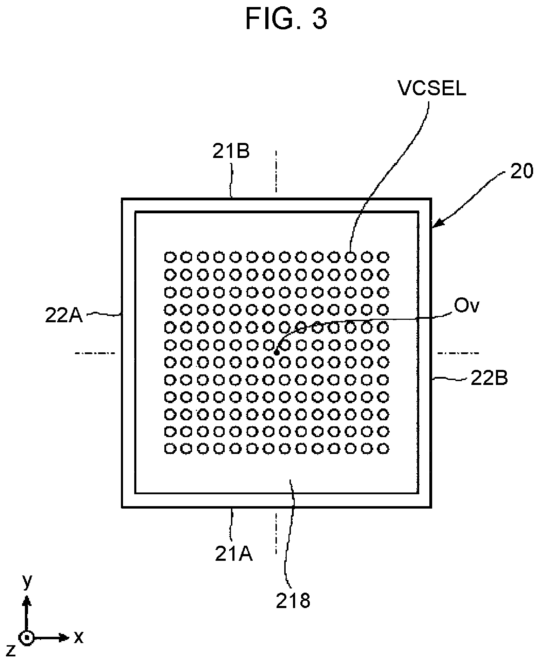

The light source 20 is constructed as a light emitting element array in which a plurality of light emitting elements are two-dimensionally provided (see Fig. 3 described below). A light emitting element is a vertical cavity surface emitting laser element VCSEL (Vertical Cavity Surface Emitting Laser) as an example. Hereinafter, a description will be given assuming that the light emitting element is a vertical cavity surface emitting laser element VCSEL. Hereinafter, a vertical cavity surface emitting laser element VCSEL is denoted as a VCSEL. Since the light source 20 is provided on the front surface of the heat dissipation base 100, the light source 20 emits light perpendicularly to the front surface of the heat dissipation base 100 in a direction away from the heat dissipation base 100. In other words, the light emitting element array is a surface emitting laser element array. Note that a plurality of light emitting elements in the light source 20 are provided in two dimensions, and the surface of the light source 20 for emitting light may be referred to as an emission surface.

The light diffusion member 30 receives incident light emitted by the light source 20. The light diffusion member 30 diffuses and emits the incident light. The light diffusion member 30 is provided to cover the light source 20 and the capacitors 70A, 70B. Specifically, the light diffusion member 30 is provided by the retainer 60 away from the light source 20 and the capacitors 70A, 70B provided on the heat dissipation base 100 by a predetermined distance, the retainer 60 being provided on the front surface of the heat dissipation base 100. The light emitted by the light source 20 is diffused by the light diffusion member 30, and is radiated to a to-be-measured object. As compared to when the light diffusion member 30 is not provided, the light emitted by the light source 20 is diffused by the light diffusion member 30, and radiated to a wider range.

When three-dimensional measurement is performed by the ToF method, the light source 20 is required to emit, for example, 100 MHz or higher pulsed light (hereinafter referred to as an emitted light pulse) with a rise time of 1 ns or less by the driver 50. When face recognition is taken as an example, the distance at which light is radiated is from approximately 10 cm to approximately 1 m. The range over which light is radiated is approximately 1 m square. Note that the distance at which light is radiated is referred to as the measurement distance, and the range over which light is radiated is referred to as the irradiation range or the measurement range. In addition, a plane virtually provided in the irradiation range or the measurement range is referred to as an irradiation plane. Note that in the case except for face recognition, the measurement distance to a to-be-measured object and the irradiation range for a to-be-measured object may be other than those mentioned above.

The 3D sensor 5 includes a plurality of light receiving elements, for example, 640 × 480 light receiving elements, and outputs a signal corresponding to the time from a timing when light is emitted by the light source 20 to a timing when the light is received by the 3D sensor 5.

For example, the light receiving elements of the 3D sensor 5 each receive pulsed reflected light (hereinafter referred to as a received light pulse) from a to-be-measured object for an emitted light pulse from the light source 20, and store an electric charge corresponding to the time until the light is received for each light receiving element. The 3D sensor 5 is constructed as a device having a CMOS structure in which each light receiving element includes two gates and charge storage units corresponding to them. Then photoelectrons generated by applying a pulse to the two gates alternately are quickly transferred to one of the two charge storage units. An electric charge corresponding to the phase difference between an emitted light pulse and a received light pulse is stored in the two charge storage units. The 3D sensor 5 then outputs, as a signal, a digital value corresponding to the phase difference between an emitted light pulse and a received light pulse through an AD converter for each of the light receiving elements. In other words, the 3D sensor 5 outputs a signal corresponding to the time from a timing when light is emitted by the light source 20 to a timing when the light is received by the 3D sensor 5. That is, a signal corresponding to the three-dimensional shape of a to-be-measured object is obtained from the 3D sensor 5. Note that the AD converter may be included in the 3D sensor 5, or may be provided outside the 3D sensor 5.

As described above, the measuring device 1 diffuses and radiates the light emitted by the light source 20 to a to-be-measured object, and receives light reflected from the to-be-measured object. In this manner, the measuring device 1 measures the three-dimensional shape of a to-be-measured object.

First, the light source 20, the light diffusion member 30, the driver 50 and the capacitors 70A, 70B included in the light emitting device 4 will be described.

### (Configuration of Light Source 20)

Fig. 3 is a plan view of the light source 20. The light source 20 is constituted by providing a plurality of VCSELs in a two-dimensional array form. In other words, the light source 20 is constituted as a light emitting element array in which the light emitting elements are VCSELs. Let x direction be the right direction of the paper surface, and y direction be the left direction of the paper surface.

Let z direction be the direction perpendicular to the x direction and the y direction. Note that the front surface of the light source 20 refers to the front side of the paper surface, that is, the surface on +z direction side, and the rear surface of the light source 20 refers to the rear side of the paper surface, that is, the surface on -z direction side. The plan view of the light source 20 is the view when the light source 20 is seen from the front surface side.

As a further description, in the light source 20, the face provided with an epitaxial layer which functions as a light emitting layer (later-described active region 206) is referred to as the front surface, front side, or front surface side of the light source 20.

A VCSEL is a light emitting element in which an active region serving as a light emitting region is provided between a lower multilayer reflector and an upper multilayer reflector laminated on a semiconductor substrate 200, the light emitting element being configured to cause a laser beam to be emitted in a direction perpendicular to the front surface. Thus, VCSELs are easily arranged in a two-dimensional array, as compared to when an edge emitting laser is used. The number of VCSELs included in the light source 20 is 100 to 1000 as an example. Note that a plurality of VCSELs are connected to each other in parallel, and driven in parallel. The aforementioned number of VCSELs is an example, and may be set according to the measurement distance and the irradiation range.

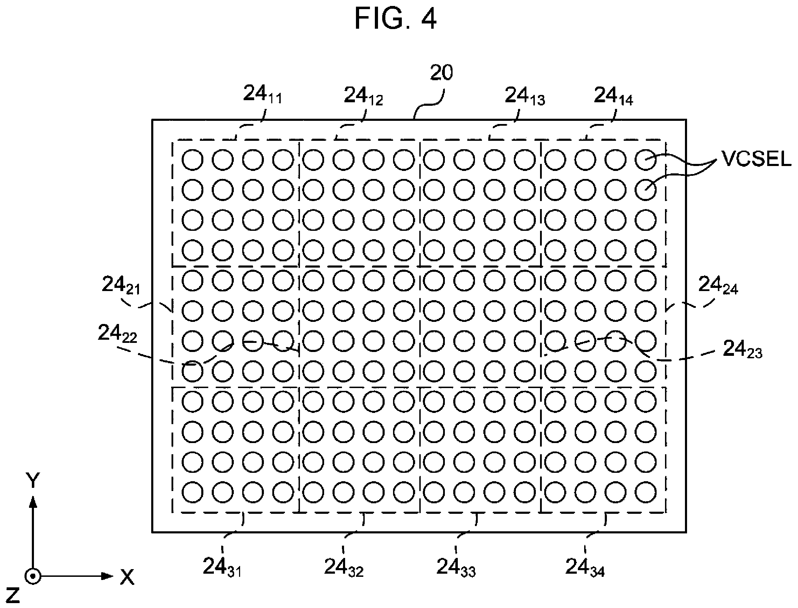

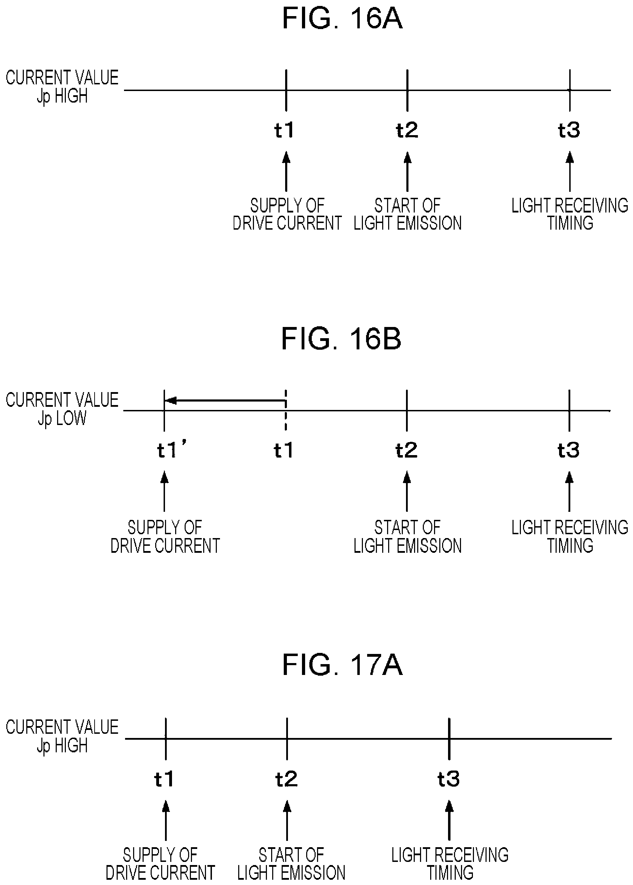

As illustrated in Fig. 4, the light source 20 is sectioned into a plurality of light emission sections 24, and is driven for each of the light emission sections. In the example of Fig. 4, as shown by a dashed line, the light source 20 is sectioned into 4 × 3 or 12 light emission sections 24₁₁ to 24₃₄; however, the number of light emission sections is not limited to this. When the light emission sections are not particularly distinguished, they are simply referred to as a light emission section 24. In the example of Fig. 4, 16 VCSELs are included in one light emission section 24; however, the number of VCSELs included in one light emission section 24 is not limited to this, and one or more VCSELs may be included.

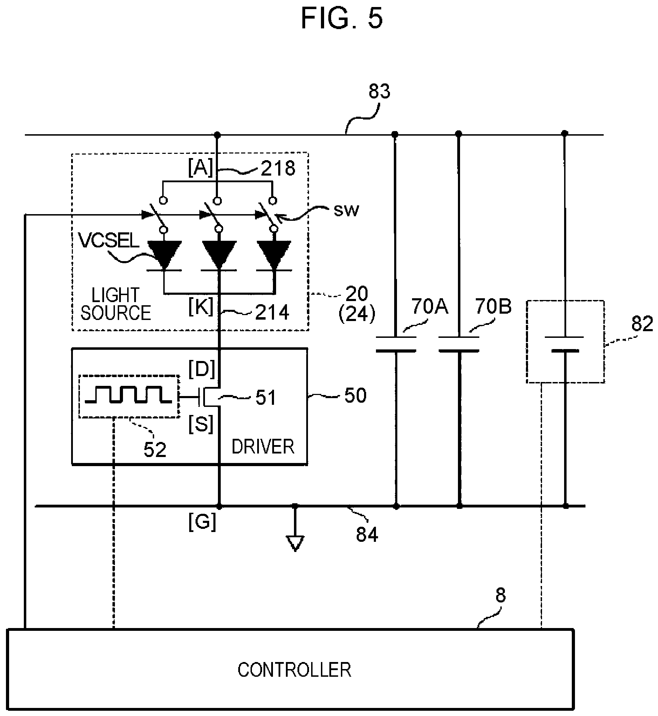

The front surface of the light source 20 is provided with an anode electrode 218 (see Fig. 5) which is common to the plurality of VCSELs. The rear surface of the light source 20 is provided with a cathode electrode 214 (see Fig. 5). In short, the plurality of VCSELs are connected in parallel. Light with high intensity is emitted by connecting the plurality of VCSELs in parallel and driving them, as compared to when VCSELs are driven individually.

Herein, the shape (referred to as the planar shape, and the same applies hereinafter) of the light source 20 as seen from the front surface side is assumed to be a rectangle. Let lateral face 21A denote the lateral face on -y direction side, lateral face 21B denote the lateral face on +y direction side, lateral face 22A denote the lateral face on -x direction side, and lateral face 22B denote the lateral face on +x direction side. The lateral face 21A and the lateral face 21B are opposed. The lateral face 22A and the lateral face 22B are respectively connected to and opposed to the lateral face 21A and the lateral face 21B.

Let center Ov be the center of the planar shape of the light source 20, that is, the center thereof in x direction and y direction.

### (Driver 50 and Capacitors 70A, 70B)

When the light source 20 is desired to be driven fast, low-side drive should be performed. The low-side drive refers to a configuration in which a drive element such as a MOS transistor is located downstream of a current path with respect to an object to be driven, such as a VCSEL. Conversely, high-side drive refers to a configuration in which a drive element is located upstream.

Fig. 5 is a diagram illustrating an example of an equivalent circuit when the light source 20 is driven by the low-side drive. In Fig. 5, the VCSELs of the light source 20, the driver 50, the capacitors 70A, 70B, and a power supply 82 are illustrated. Note that the power supply 82 is provided in the controller 8 illustrated in Fig. 1. The power supply 82 generates a DC voltage having a power supply potential on +side and a reference potential on -side. The power supply potential is supplied to a power supply line 83, and the reference potential is supplied to a reference line 84. Note that the reference potential may be referred to as the ground potential (may be denoted as GND, and it is denoted as [G] in Fig. 5).

As described above, the light source 20 is constructed by connecting a plurality of VCSELs in parallel. The anode electrode 218 (see Fig. 3, denoted as [A] in Fig. 5) of the VCSEL is connected to the power source line 83.

As described above, the light source 20 is sectioned into a plurality of light emission sections 24, and the controller 8 drives the VCSEL for each of the light emission sections 24. Note that in Fig. 5, three VCSELs are illustrated only in one light emission section 24, and illustration of other VCSELs and light emission sections is omitted.

As illustrated in Fig. 5, switch elements SW are provided between VCSELs and the power source line 83, and the switch elements SW are turned ON or OFF simultaneously by a command from the controller 8. Thus, the VCSELs included in one light emission section 24 are controlled to emit light or not to emit light at the same timing.

The driver 50 includes an n-channel MOS transistor 51, and a signal generating circuit 52 that turns ON and OFF the MOS transistor 51. The drain (denoted as [D] in Fig. 5) of the MOS transistor 51 is connected to the cathode electrode 214 (see Fig. 3, denoted as [K] in Fig. 5) of the VCSEL. The sauce (denoted as [S] in Fig. 5.) of the MOS transistor 51 is connected to the reference line 84. The gate of the MOS transistor 51 is connected to the signal generating circuit 52. In short, the VCSEL and the MOS transistor 51 of the driver 50 are connected in series between the power source line 83 and the reference line 84. The signal generating circuit 52 generates an "H level" signal that sets the MOS transistor 51 to an ON state, and an "L level" signal that sets the MOS transistor 51 to an OFF state by the control of the controller 8.

The capacitors 70A, 70B each have one terminal connected to the power source line 83, and the other terminal connected to the reference line 84. When the capacitors 70 are plural in number, the plurality of capacitors 70 are connected in parallel. In Fig. 5, it is assumed that the capacitors 70 are two capacitors 70A, 70B. Note that each capacitor 70 is, for example, an electrolytic capacitor or a ceramic capacitor.

Next, the driving method which is the low-side drive for the light source 20 will be described.

First, the controller 8 turns ON the switch elements SW in the light emission section 24 including the VCSELs which are desired to emit light, and turns OFF the switch elements SW in the light emission section 24 including the VCSELs which are not desired to emit light.

Hereinafter, the drive of the VCSELs included in the light emission section 24 for which the switch element SW is turned ON will be described.

First, the signal generated by the signal generating circuit 52 in the driver 50 is assumed to be "L level". In this case, the MOS transistor 51 is in an OFF state. Specifically, no current flows between the source ([S] in Fig. 5) and the drain ([D] in Fig. 5) of the MOS transistor 51. Thus, no current flows through the VCSELs which are connected in series to the MOS transistor 51. That is, the VCSELs do not emit light.

At this point, the capacitors 70A, 70B are connected to the power supply 82, and one terminals connected to the power source line 83 for the capacitors 70A, 70B have the power supply potential, and the other terminals connected to the reference line 84 have the reference potential. Thus, a current flows (electric charges are supplied) from the power supply 82, and the capacitors 70A, 70B are charged.

Subsequently, when the signal generated by the signal generating circuit 52 in the driver 50 becomes "H level", the MOS transistor 51 makes a transition from OFF state to ON state. Then, a closed loop is formed by the capacitors 70A, 70B, and the MOS transistor 51 and the VCSELs connected in series, and the electric charges accumulated in the capacitors 70A, 70B are supplied to the MOS transistor 51 and the VCSELs connected in series. That is, a drive current flows through the VCSELs which emit light. The closed loop is a driving circuit to drive the light source 20.

When the signal generated by the signal generating circuit 52 in the driver 50 becomes "L level" again, the MOS transistor 51 makes a transition from ON state to OFF state. Thus, the closed loop (driving circuit) formed by the capacitors 70A, 70B, and the MOS transistor 51 and the VCSELs connected in series becomes an open loop, and no drive current flows through the VCSELs. Thus, the VCSELs stop emitting light. Then electric charges are supplied from the power supply 82 to the capacitors 70A, 70B, which are charged.

As described above, each time the signal output by the signal generating circuit 52 makes a transition to "H level" and "L level", the MOS transistor 51 repeats ON and OFF, and the VCSELs repeat emission of light and non-emission of light. The repeat of ON and OFF of the MOS transistor 51 may be called switching.

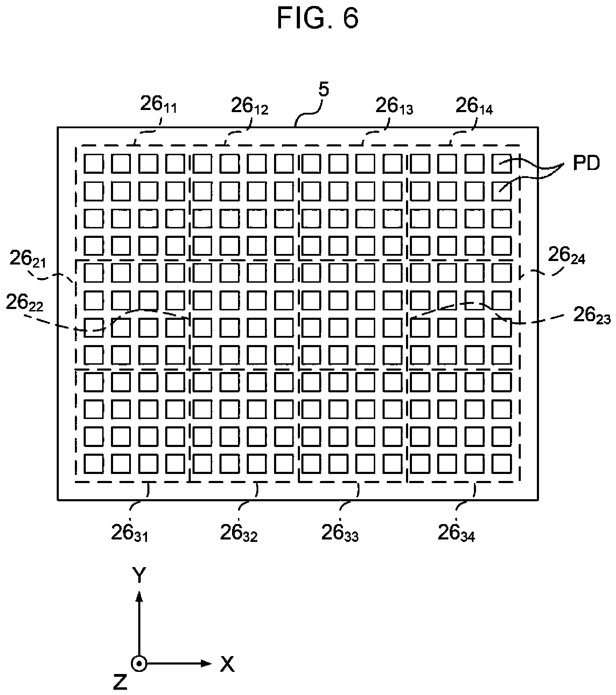

In this exemplary embodiment, as illustrated in Fig. 6, the 3D sensor 5 is sectioned into a plurality of light receiving sections 26. Each light receiving section 26 includes one or more light receiving elements PD. In the example of Fig. 6, one light receiving section 26 includes 16 light receiving elements PD; however, the number of light receiving elements PD is not limited to this. Note that in the example of Fig. 6, for the sake of description, the 3D sensor 5 is sectioned into 4 × 3 light emission sections 26₁₁ to 26₃₄ as in the light emission section 24; however, the 3D sensor 5 may be sectioned into a number of light emission sections different from that of the light emission section 24. Note that when the light emission sections are not particularly distinguished, they are simply referred to as a light emission section 26.

In this exemplary embodiment, when, for each light emission section 24, all VCSELs belonging to the light emission section 24 are caused to emit light, the light receiving section 26 to which light receiving elements PD to receive direct light belong is assumed to be identified in advance. The correspondence relationship between the light emission division 24 and the light emission division 26 is pre-stored as a section correspondence table 16B in the storage unit 16 (see Fig. 2).

For example, each light emission section 24 is caused to emit light to a predetermined to-be-measured object successively in a state of no obstacle, then the section correspondence table 16B is determined from the amount of light received by each light receiving section 26.

Note that correspondence between the light emission section 24 and the light receiving section 26 may be any of one-to-one, many-to-one, one-to-many, and many-to-many; however, in this exemplary embodiment, for the sake of description, the correspondence is assumed to be one-to-one.

Meanwhile, when the light emitted from the light source 20 is directly incident to a to-be-measured object, and only reflected light can be received by the 3D sensor 5, the distance from the optical device 3 to the to-be-measured object can be measured with high accuracy.

However, practically, the 3D sensor 5 includes a lens which is not illustrated, and there is a lens flare problem that unnecessary light multiply reflected by the lens is received by a light receiving element that should not receive light originally. In the following, the light that is directly incident to a to-be-measured object and reflected, and directly received by a light receiving element is referred to as direct light. In addition, unnecessary light other than the direct light is referred to indirect light.

In a light receiving element which receives not only the direct light, but also the indirect light due to the lens flare, the amount of light received exceeds expectations, and may be saturated. For example, even when an obstacle, such as a user's finger, is present between the measuring device 1 and a to-be-measured object, the amount of light received may exceed expectations due to unnecessary indirect light reflected by the obstacle.

Thus, in this exemplary embodiment, only the light emission sections 24 corresponding to the light receiving sections 26 including light receiving elements PD with an amount of light received less than a predetermined threshold are caused to emit light, and the light emission sections 24 corresponding to the light receiving sections 26 including light receiving elements PD with an amount of light received greater than or equal to a predetermined threshold are not caused to emit light. Note that a series of processes from causing the light source 20 to emit light to measuring the distance to a to-be-measured object may be referred to as integration. In addition, in the following, causing the VCSELs belonging to a light emission section 24 to emit light may be simply referred to as causing a light emission section 24 to emit light.

In this manner, although the number of light emission sections 24 to be caused to emit light varies with the number of light receiving sections 26 including light receiving elements PD with an amount of light received greater than or equal to a predetermined threshold, when the amount of light of each light emission section 24 is maintained to be unchanged, the value of current flowing through each light emission section 24 does not change, thus as the number of light emission sections 24 increases, the drive current supplied to the entire light source 20 needs to be increased.

In this exemplary embodiment, the controller 8 controls the light source 20 and the driver 50 so that the drive current supplied to the entire light source 20 increases as the number of light emission sections 24 to be caused to emit light increases in order to achieve an unchanged amount of light of each light emission section 24 to be caused to emit light. When the drive current is increased in this manner, the rise time of the drive current of the light source 20 increases. As a result, a variation in the accuracy of measurement of the distance to a to-be-measured object occurs depending on the number of light emission sections 24 to be caused to emit light. This is because the total current driven by the driver 50 is increased. Note that the delay time (the rise time of light emission) since the drive current is supplied to the light source 20 until the light emission section 24 actually starts to emit light by relaxation oscillation does not change because the value of current flowing through each light emission section 24 does not change.

In this exemplary embodiment, the supply timing of the drive current is controlled so that even when a change occurs in the number of light emission sections 24 to be caused to emit light, in other words, even when a change occurs in the arrangement of light emission sections 24 to be caused to emit light, change in the light receiving timing of the light receiving elements belonging to the light receiving sections 26 falls within a predetermined range. Here, the predetermined range is such a range that allows a measurement error of the distance to a to-be-measured object.

Specifically, when the amount of light of each of the light emission sections 24 to be caused to emit light is maintained to be unchanged regardless of a change in the number of light emission sections 24 to be caused to emit light, as the number of light emission sections 24 increases, the supply timing of the drive current of the light emission sections 24 to be caused to emit light is advanced. Consequently, even when a change occurs in the number of light emission sections 24, change in the light receiving timing of the light receiving elements PD falls within a predetermined range, thus a variation in the accuracy of measurement of the distance to a to-be-measured object is prevented.

Note that the arrangement of light emission sections 24 to be caused to emit light refers to the positions of light emission sections 24 to be caused to emit light, specifically, the positions on the XY plane in Fig. 4. Then, change in the arrangement of light emission sections 24 to be caused to emit light refers to change in the position of at least one of the light emission sections 24 to be caused to emit light due to change in the number of light emission sections 24 to be caused to emit light or change in the position of at least one of the light emission sections 24 to be caused to emit light although the number of light emission sections 24 to be caused to emit light is the same.

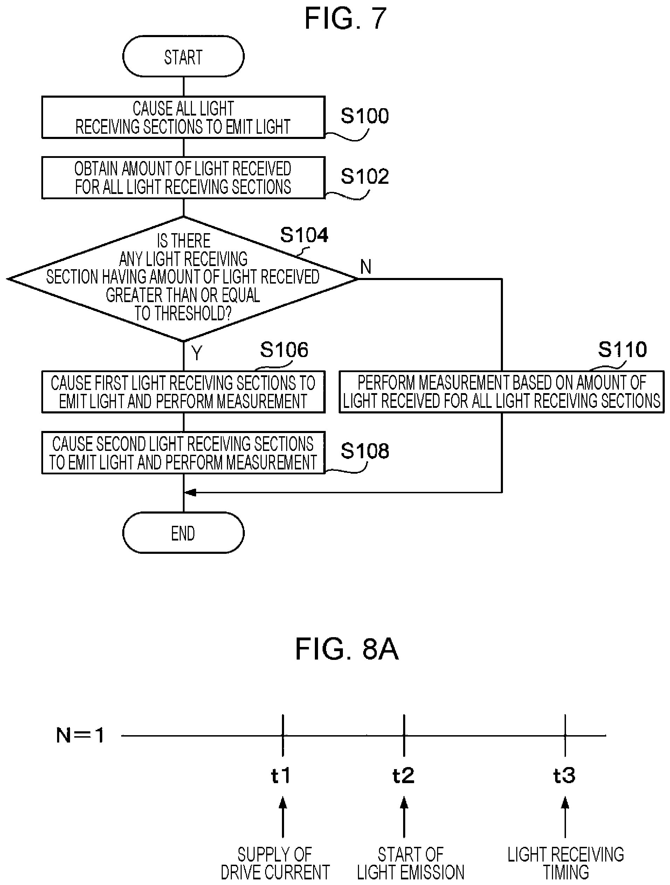

Next, the operation of the measuring device 1 according to this exemplary embodiment will be described. Fig. 7 is a flowchart illustrating the flow of a measurement process executed by the controller 8 of the measuring device 1 according to this exemplary embodiment. The measurement process illustrated in Fig. 7 is executed by the CPU 12A reading the measurement program 16A stored in the storage unit 16.

In step S100, the MOS transistor 51 of the driver 50 is set to ON state as well as all switch elements SW are set to ON state so that the VCSELs in all light emission sections 24 of the light source 20 are caused to emit light. Thus, all VCSELs are caused to emit light.

In step S102, the amount of light (the amount of electric charges) received by the light receiving elements of all light receiving sections 26 is obtained from the 3D sensor 5.

In step S104, it is determined whether there is any light receiving element having an amount of light received greater than or equal to a predetermined threshold. The threshold is set to a value which makes it possible to determine that the indirect light other than the direct light has been received and the amount of light received is saturated. When there is a light receiving element having an amount of light received greater than or equal to a predetermined threshold, the flow proceeds to S106. In contrast, when there is no light receiving element having an amount of light received greater than or equal to a predetermined threshold, the flow proceeds to S110.

In step S106, the section correspondence table 16B is referred to, and the light emission sections 24 corresponding to the light receiving sections 26 including light receiving elements having an amount of light received greater than or equal to a predetermined threshold are identified. The drive current is supplied to first light emission sections 24 which are defined as the light emission sections 24 other than the identified light emission sections 24, and the VCSELs belonging to the first light emission sections 24 are caused to emit light for a predetermined number of times.

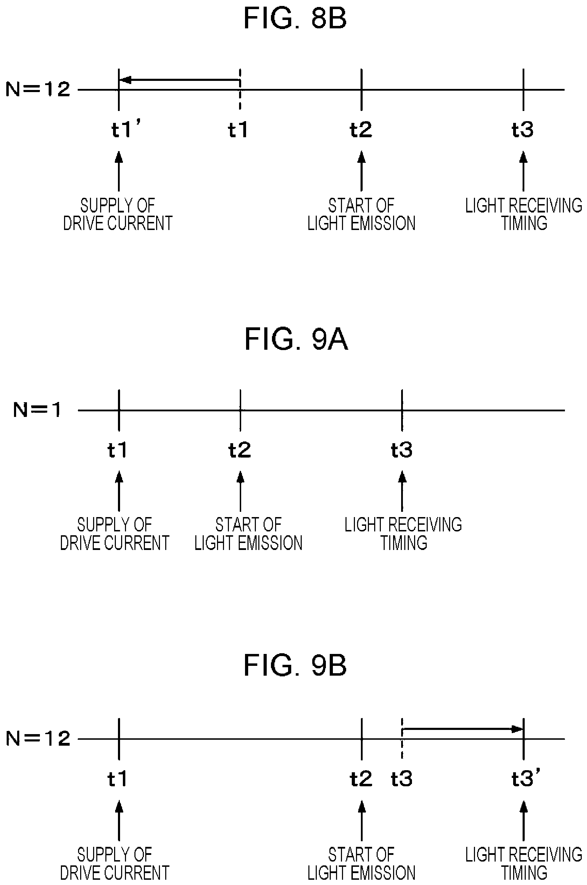

At this point, supply timing t1 of the drive current to cause the first light emission sections 24 to emit light is set according to the number of the first light emission sections 24. Specifically, as the number of the first light emission sections 24 increases, the supply timing t1 of the drive current is advanced. As an example, as illustrated in Figs. 8A, 8B, the supply timing of the drive current is set so that when the number of the first light emission sections 24 is 12 (N = 12), supply timing t1' of the drive current is advanced, as compared to when the number of the first light emission sections 24 is one (N = 1). Thus, even when a change occurs in the number of the first light emission sections 24, change is prevented in the time from light emission start t2 of the first light emission sections 24 to light receiving timing t3 of the light receiving elements.

The amount of light received by the light receiving elements belonging to the light receiving sections 26 corresponding to the first light emission sections 24 caused to emit light is obtained from the 3D sensor 5, and the distance to a to-be-measured object is measured by the aforementioned phase difference method. Specifically, the VCSELs belonging to the first light emission sections 24 are caused to emit light to measure the distance to a to-be-measured object, the first light emission sections 24 corresponding to the light receiving sections 26 including the light receiving elements having an amount of light received less than a threshold. In this manner, the distance to a to-be-measured object is measured by causing the VCSELs to emit light, which belong to the first light emission sections 24 corresponding to the light receiving sections 26 less effected by indirect light. Note that the distance to a to-be-measured object may be measured by just obtaining the amount of light received by the light receiving elements belonging to the light receiving sections 26 corresponding to the first light emission sections 24.

Note that instead of setting the supply timing t1 of the drive current to cause the first light emission sections 24 to emit light according to the number of the first light emission sections 24, the receiving timing t3 of the 3D sensor 5 may be set according to the number of the first light emission sections 24. Specifically, as the number of the first light emission sections 24 increases, the light receiving timing t3 is delayed. As an example, as illustrated in Figs. 9A, 9B, the receiving timing is set so that when the number of the first light emission sections 24 is 12 (N = 12), light receiving timing t3' is delayed, as compared to when the number of the first light emission sections 24 is one (N = 1). Here, the light receiving timing is such timing that enables light receiving by the 3D sensor 5. In this manner, even when a change occurs in the number of the first light emission sections 24, change is prevented in the time from the light emission start t2 of the first light emission sections 24 to the light receiving timing t3 of the light receiving elements.

In step S108, the VCSELs belonging to second light emission sections 24 other than the first light emission sections 24 are caused to emit light, and the amount of light received by light receiving elements is obtained from the 3D sensor 5 to measure the distance to a to-be-measured object, the light receiving elements belonging to the light receiving sections 26 corresponding to the second light emission sections 24 which are caused to emit light. At this point, in step S106, the VCSELs belonging to the second light emission sections 24 are caused to emit light for the number N2 of times less than the number N1 of times, for which the VCSELs in the first light emission sections 24 are caused to emit light. Note that the number N2 of times is set to a number such that the amount of light received by the light receiving elements is less than a threshold. Consequently, the amount of light received by the light receiving elements is prevented from exceeding a threshold.

Also, in step S108, as in step S106, the supply timing t1 of the drive current to cause the second light emission sections 24 to emit light is set according to the number of the second light emission sections 24, or the light receiving timing t3 of the 3D sensor 5 is set according to the number of the first light emission sections 24.

In step S110, there is no light receiving element having an amount of light received greater than or equal to a threshold, thus the distance to a to-be-measured object is measured from the amount of light received by all light receiving elements obtained in step S102.

In this manner, in this exemplary embodiment, as the first light emission sections 24, the light emission sections are set, which correspond to the light receiving sections 26 including light receiving elements having an amount of light received less than a predetermined threshold, and as the second light emission sections 24, the light emission sections are set, which correspond to the light receiving sections 26 including light receiving elements having an amount of light received greater than or equal to a predetermined threshold. For the second light emission sections 24, they are caused to emit light for a reduced number of times of light emission.

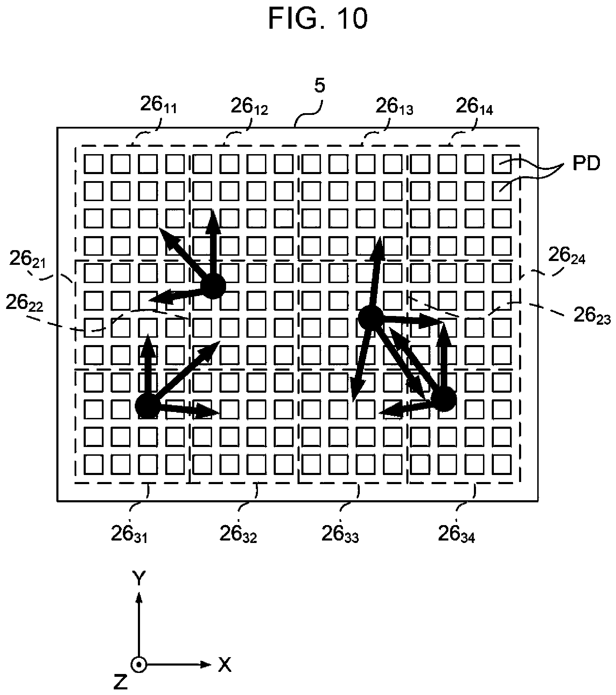

For example, as illustrated in Fig. 10, the amount of light received by at least part of the light receiving elements belonging to light receiving sections 26₂₂, 26₂₃, 26₃₁, 26₃₄ is greater than or equal to a threshold, and as shown by arrows, it is assumed that light has also been received by peripheral light receiving sections. In this case, light emission sections 24₂₂, 24₂₃, 24₃₁, 24₃₄ corresponding to the light receiving sections 26₂₂, 26₂₃, 26₃₁, 26₃₄ are set as second light emission sections 24, and the light emission sections 24 corresponding to the other light receiving section 26 are set as first light emission sections 24.

Note that in the process of Fig. 7, the process in step S106 is executed, then the process in step S108 is executed; however, the process in step S106 and the process in step S108 may be executed concurrently. Specifically, light emission of the first light emission sections 24 and light emission of the second light emission sections 24 are performed concurrently. Thus, the process time is reduced.

### <Second Exemplary Embodiment>

Next, a second exemplary embodiment will be described. Note that the same components as in the first exemplary embodiment are labeled with the same symbol, and a detailed description is omitted.

The configuration of the measuring device 1 is the same as in the first exemplary embodiment, thus a description thereof is omitted.

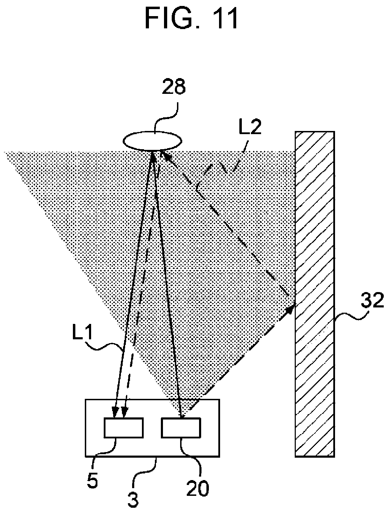

The problem which occurs when light from the light source 20 is radiated to a to-be-measured object, and the distance to the to-be-measured object is measured by receiving reflected light is not only the lens flare described in the first exemplary embodiment. For example, as illustrated in Fig. 11, the light emitted from the light source 20 is not only direct light L1 which is directly incident to a to-be-measured object 28 and reflected. For example, there is a multi-path problem that light is reflected by an obstacle such as a wall 32, and is received by the 3D sensor 5 along multiple paths as multi-path light L2.

Due to the multi-path, a light receiving element receives not only the direct light, but also the indirect light which should not be received originally, which may affect on the accuracy of the measured distance.

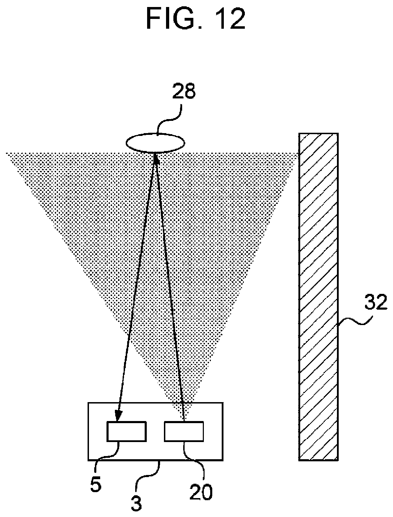

Thus, in this exemplary embodiment, the second light emission section 24 is not caused to emit light, which corresponds to the light receiving section 26 including a light receiving element which has received indirect light which should not be received originally, but the VCSELs belonging to the first light emission sections 24 other than the second light emission sections 24 are caused to emit light to measure the distance to a to-be-measured object. Consequently, as illustrated in Fig. 12, the distance to the to-be-measured object 28 is measured with the effect of the multi-path light L2 reduced.

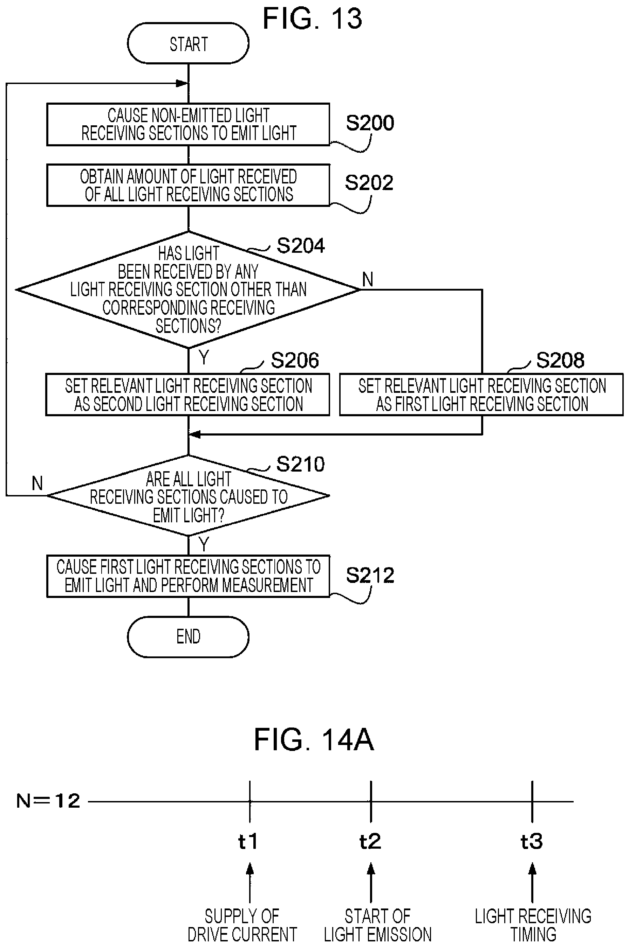

Hereinafter, the operation of this exemplary embodiment will be described. Fig. 13 is a flowchart illustrating the flow of a measurement process executed by the controller 8 of the measuring device 1 according to this exemplary embodiment.

In step S200, one non-emitted light emission section 24 is caused to emit light. Specifically, the MOS transistor 51 of the driver 50 is set to ON state as well as the switch elements SW in the one non-emitted light emission section 24 are set to ON state so that the VCSELs in the one non-emitted light emission section 24 are caused to emit light. Consequently, the VCSELs in the one light emission section 24 are caused to emit light, and the VCSELs in the other light emission sections 24 are not caused to emit light.

In step S202, the amount of light received by the light receiving elements belonging to all light receiving sections 26 is obtained from the 3D sensor 5.

In step S204, the section correspondence table 16B is referred to, and the first light receiving section 26 corresponding to the light emission section 24 caused to emit light in step S200 is identified. It is determined whether light has been received by the second light receiving sections 26 other than the first light receiving sections 26 based on the amount of light received by the light receiving elements belonging to all light receiving sections 26 obtained in step S202.

When light has been received by the second light receiving sections 26, the flow proceeds to step S206, and when no light has been received by the second light receiving sections 26, the flow proceeds to step S208.

In step S206, the light emission section 24 caused to emit light in step S200 is set as a second light emission section 24.

In contrast, in step S208, the light emission section 24 caused to emit light in step S200 is set as a first light emission section 24.

In step S210, it is determined whether all light emission sections 24 have been caused to emit light, and when all light emission sections 24 have been caused to emit light, the flow proceeds to step S212. In contrast, when there is a non-emitted light emission section 24, the flow proceeds to step S200, and the non-emitted light emission section 24 is caused to emit light, then the same aforementioned process is performed.

In step S212, only the first light emission section 24 set in step S208 is caused to emit light for a predetermined number of times.

At this point, as in the first exemplary embodiment, the supply timing t1 of the drive current to cause the first light emission section 24 to emit light is set according to the number of the first light emission sections 24. Specifically, as the number of the first light emission sections 24 increases, the supply timing of the drive current is advanced.

The amount of light received by each light receiving element is obtained from the 3D sensor 5 to measure the distance to a to-be-measured object by the aforementioned phase difference method.

Note that as in the first exemplary embodiment, instead of setting the supply timing t1 of the drive current to cause the first light emission sections 24 to emit light according to the number of the first light emission sections 24, the receiving timing t3 of the 3D sensor 5 may be set according to the number of the first light emission sections 24. Specifically, as the number of the first light emission sections 24 increases, the light receiving timing t3 may be delayed.

In this manner, in this exemplary embodiment, when light is received by a light receiving element belonging to the second light receiving sections 26 other than the first light receiving section 26 corresponding to the light emission section 24 caused to emit light, the first light emission sections 24 other than the second light emission sections 24 corresponding to the second light receiving sections 26 are caused to emit light to measure the distance to a to-be-measured object.

The exemplary embodiment is not intended to limit the disclosure according to the claims, and all the combinations of the features described in the exemplary embodiment are not necessarily essential to the solution of the disclosure. The exemplary embodiment described above includes the disclosure at various stages, and various aspects of the disclosure are provided by combining multiple claim components disclosed. As long as an effect is obtained even with some claim components removed from all claim components shown in the exemplary embodiment, the configuration with some claim components removed can be provided as the disclosure.

For example, in order to avoid the effect of a lens flare in the first exemplary embodiment and in order to avoid the effect of a multi-path in the second exemplary embodiment, the supply timing t1 of the drive current or the light receiving timing t3 of the 3D sensor 5 is controlled according to the number of light emission sections 24 to be caused to emit light; however, for example, for the purpose of saving electric power, the light emission sections 24 may be desired to be reduced in number and caused to emit light. Even in this case, as in the first exemplary embodiment and the second exemplary embodiment, the supply timing t1 of the drive current to cause the light emission sections 24 to emit light may be set according to the number of the light emission sections 24. In addition, instead of setting the supply timing t1 of the drive current, the light receiving timing t3 of the 3D sensor 5 may be set according to the number of the light emission sections 24.

In order to increase the measurement distance, the optical power emitted from part of the light emission sections 24 may be desired to be increased and emitted. In this case, even when a change occurs in the number of the light emission sections 24, the total amount of light of the light emission sections 24 to be caused to emit light is maintained to be unchanged. When the number of light emission sections 24 to be caused to emit light is decreased, the drive current supplied to one light emission section 24 is increased because the magnitude of drive current of the entire light source 20 is the same as in the case where all light emission sections 24 are caused to emit light.

When the number of light emission sections 24 is decreased, the current path along which the drive current flows becomes narrow, as compared to the case where all light emission sections 24 are caused to emit light, thus the inductance may increase. When the inductance increases, the drain voltage of the MOS transistor 51 is reduced due to a transient current, and the supply timing t1 of the drive current may be delayed.

When the number of light emission sections 24 to be caused to emit light is decreased like this, the time from supply of the drive current to actual light emission may be made shorter or longer due to the balance between an increase in the drive current supplied to one light emission section 24 and an increase in the inductance of the current path for the drive current.

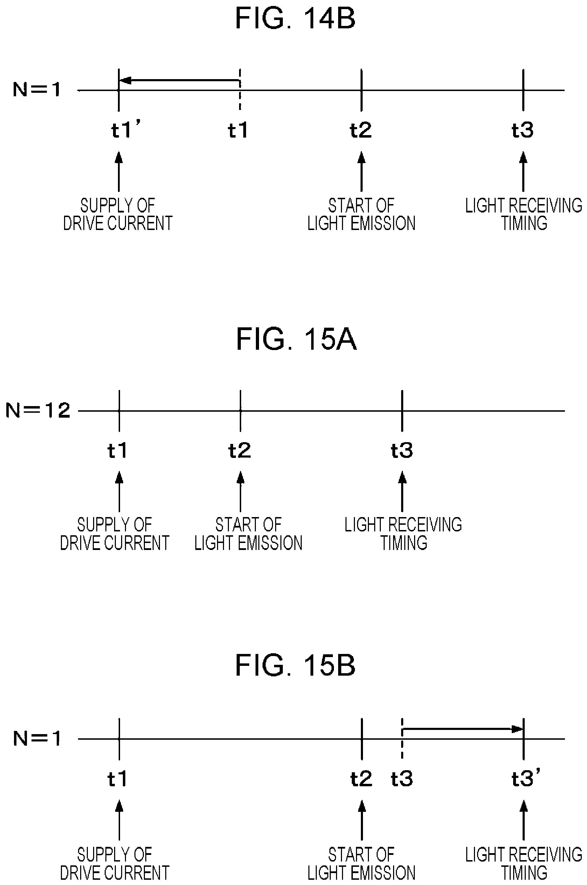

Thus, when the total amount of light of the light emission sections 24 to be caused to emit light is maintained to be unchanged regardless of a change in the number of the light emission sections 24, supply timing t1 of the drive current is set, the supply timing t1 being determined based on the inductance of the current path for the drive current which flows through the light emission sections 24 to be caused to emit light. For example, a correspondence relationship between the number of light emission sections 24 and the supply timing t1 of the drive current to maintain the time from the start of light emission to the light receiving timing to be unchanged is determined in advance by experiments, and stored in the storage unit 16. The supply timing t1 according to the number of light emission sections 24 may be set. In this example, specifically, as the inductance increases, in other words, as the number of light emission sections 24 to be caused to emit light decreases to enhance the optical power emitted, the supply timing t1 of the drive current is advanced. As an example, as illustrated in Figs. 14A, 14B, the supply timing of the drive current is set so that when the number of light emission sections 24 to be caused to emit light is one (N = 1), the supply timing t1' of the drive current is advanced, as compared to when the number of light emission sections 24 to be caused to emit light is 12 (N = 12). Thus, even when a change occurs in the number of the light emission sections 24 to be caused to emit light, change is prevented in the time from the light emission start t2 of the light emission sections 24 to be caused to emit light to the light receiving timing t3 of the light receiving elements. In addition, instead of setting the supply timing t1 of the drive current, the light receiving timing t3 of the 3D sensor 5 may be set according to the number of the light emission sections 24. Specifically, as the inductance increases, in other words, as the number of light emission sections 24 to be caused to emit light decreases, the light receiving timing t3 is delayed. As an example, as illustrated in Figs. 15A, 15B, the light receiving timing is set so that when the number of light emission sections 24 to be caused to emit light is one (N = 1), the light receiving timing t3' is delayed, as compared to when the number of light emission sections 24 to be caused to emit light is 12 (N = 12). Thus, even when a change occurs in the number of the light emission sections 24 to be caused to emit light, change is prevented in the time from the light emission start t2 of the light emission sections 24 to be caused to emit light to the light receiving timing t3 of the light receiving elements.

Note that in the case where even when the number of the light emission sections 24 caused to emit light is the same, the positions of the light emission sections 24 to be caused to emit light are different, one of the supply timing t1 of the drive current and the light receiving timing t3 may be controlled according to the positions of the light emission sections 24 to be caused to emit light.

In the exemplary embodiments, a case has been described in which one of the supply timing t1 of the drive current and the light receiving timing t3 is controlled according to the number of the light emission sections 24 to be caused to emit light; however, both the supply timing t1 of the drive current and the light receiving timing t3 may be controlled according to the number of the light emission sections 24 to be caused to emit light.

In the exemplary embodiments, a case has been described in which the value of a current flowing through each light emission section 24 does not change, but as a modification, a case will be described in which the value of a current flowing through each light emission section 24 is changed.

The drive current for each light emission section 24 to be caused to emit light may be changed according to the number of the light emission sections 24 to be caused to emit light as well as the distance measurement range. For example, when the number of the light emission sections 24 to be caused to emit light is decreased without changing the total drive current supplied to the light source 20, the drive current for each light emission section 24 to be caused to emit light increases. In this situation, the delay time since the drive current is supplied to the light source 20 until the VCSELs in the light emission sections 24 actually start to emit light is reduced.

The delay time td is represented by the following expression.$td = τ a \times 1 n \left(Jp/\left(Jp-Jth+Jb\right)\right)$ (1)

Where τa is the carrier lifetime, Jp is the current value of step-like drive current, Jb is the current value of bias current, and Jth is the current value of threshold current. In addition, Jb ≤ Jth.

As the current value Jp of drive current increases, the delay time td is reduced from Expression (1). As a result, when the drive current is changed for each of the light emission sections 24 to be caused to emit light, a variation occurs in the accuracy of measurement of the distance to a to-be-measured object.

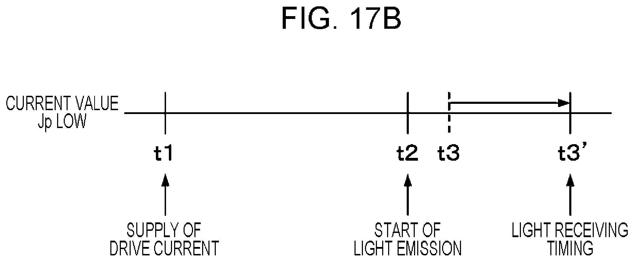

Thus, the supply timing t1 of the drive current is set based on the delay time td, that is, the current value Jp of the drive current. Specifically, as the current value Jp decreases, the supply timing t1 of the drive current is advanced. As an example, as illustrated in Figs. 16A, 16B, the supply timing of the drive current is set so that the supply timing t1' of the drive current when the current value Jp is low is advanced, as compared to when the current value Jp is high. Consequently, even when a change occurs in the current value Jp, change is prevented in the time from the light emission start t2 of the light emission sections 24 to be caused to emit light to the light receiving timing t3 of the light receiving elements. In addition, instead of setting the supply timing t1 of the drive current, the light receiving timing t3 of the 3D sensor 5 may be set according to the current value Jp. Specifically, as the current value Jp decreases, the light receiving timing t3 is delayed. As an example, as illustrated in Figs. 17A, 17B, the light receiving timing is set so that the light receiving timing t3' when the current value Jp is low is delayed, as compared to when the current value Jp is high. Consequently, even when a change occurs in the current value Jp, change is prevented in the time from the light emission start t2 of the light emission sections 24 to be caused to emit light to the light receiving timing t3 of the light receiving elements.

In the exemplary embodiments, a case has been described in which the three-dimensional shape of a to-be-measured object is identified by measuring the distance to a to-be-measured object; however, whether a to-be-measured object is present within a predetermined distance may be detected only, for example.

A configuration may be adopted in which the controller that performs a process of controlling the supply timing of the drive current of the light source 20 among the processes in Figs. 7, 13 is incorporated in the light emitting device 4.

Note that in the exemplary embodiments, a configuration has been described, in which the measurement program 16A is installed in the storage unit 16; however, the configuration is not limited to this. The measurement program 16A according to the exemplary embodiments may be provided in a form of a computer-readable recording medium on which the measurement program 16A is recorded. For example, the measurement program 16A according to the exemplary embodiments may be provided as a form of an optical disk such as CD (Compact Disc)-ROM and DVD (Digital Versatile Disc)-ROM or a semiconductor memory such as a USB (Universal Serial Bus) memory and a memory card on which the measurement program 16A is recorded. Alternatively, the measurement program 16A according to the exemplary embodiments may be obtained from an external device through a communication line coupled to the communication unit 14.

In the exemplary embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiments above, the term "processor" is broad enough to encompass one processor or plural processors in collaboration which are located physically apart from each other but may work cooperatively. The order of operations of the processor is not limited to one described in the exemplary embodiments above, and may be changed as needed. In the exemplary embodiments, a case has been described in which a surface-emitting light emitting element that emits light in a direction perpendicular to the front surface of the light source 20 is used as the light source 20; however, a surface-emitting light emitting element that emits light in a direction perpendicular to the rear surface of the light source 20 may be used, or a light emitting element that emits light from a lateral face of the light source 20 may be used. In the exemplary embodiments, a case has been described in which a laser element is used as a light emitting element; however, another light emitting element, such as an LED (Light Emitting Diode) may be used. In the exemplary embodiments, a case has been described in which a plurality of light emitting elements, which are included in one light emission section 24 and turned ON and OFF by the same switch element SW, are provided adjacent to each other, in other words, a plurality of light emitting elements included in one light emission section 24 collectively form a unity; however, the configuration is not limited to this. A plurality of light emitting elements, which are included in one light emission section 24 and turned ON and OFF by the same switch element SW, may not be adjacent to each other, and may be separately provided.

In the exemplary embodiments, as an example, a case in which some light receiving elements have an amount of light received greater than or equal to a predetermined threshold, and a case in which the optical power emitted is desired to be enhanced have been described; however, application is not limited to these. For example, application may be directed to a case in which a region desired to be measured in three dimensions is automatically detected from a separately prepared two-dimensional image, and according to the result, the number of light emission sections to be caused to emit light is determined.

## Claims

1. A detection device (1) comprising:
a light emitting element array (20) including a plurality of light emission sections (24), each light emission section (24) comprising a plurality of light emitting elements;
a light receiving element array (5) including a plurality of light receiving elements that receive reflected light of light emitted from the light emitting element array to an object to be detected;
a driver (50) that drives the light emission sections (24); and
a detector (8) that detects the object to be detected, the detector having a processor (12) operable to control at least one of a supply timing (t1) of a drive current to the light emission sections (24) to be caused to emit light and a light receiving timing (t3) of the light receiving elements,
wherein, when an amount of light emitted by each light emission section (24) to be caused to emit light is maintained to be unchanged regardless of a change in number of the light emission sections (24) to be caused to emit light, either
the detector (8) controls the supply timing (t1) so that, as the number of the light emission sections (24) to be caused to emit light increases, the supply timing (t1') is advanced, so that a time from a start of light emission (t2) of the light emission sections (24) to be caused to emit light to the light receiving timing (t3) of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3), and/or
the detector (8) controls the light receiving timing (t3) so that, as the number of the light emission sections (24) to be caused to emit light increases, the light receiving timing (t3') is delayed so that a time from a start of light emission (t2) of the light emission sections (24) to be caused to emit light to the light receiving timing (t3') of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3').

2. A detection device (1) comprising:
a light emitting element array (20) including a plurality of light emission sections (24), each light emission section (24) comprising a plurality of light emitting elements;
a light receiving element array (5) including a plurality of light receiving elements that receive reflected light of light emitted from the light emitting element array to an object to be detected;
a driver (50) that drives the light emission sections (24); and
a detector (8) that detects the object to be detected, the detector having a processor (12) operable to control at least one of a supply timing (t1) of a drive current to the light emission sections (24) to be caused to emit light and a light receiving timing (t3) of the light receiving elements,
wherein when a total amount of light emitted by the light emission sections (24) to be caused to emit light is maintained to be unchanged, regardless of a change in number of the light emission sections (2) to be caused to emit light, the detector (8) controls at least one of the supply timing (t1) and the light receiving timing (t3) which are determined based on an inductance of a current path for a drive current which flows through the light emission sections (24) to be caused to emit light,
wherein the detector (8) controls the supply timing (t1) so that, as the number of the light emission sections (24) to be caused to emit light decreases, the supply timing (t1') is advanced, so that a time from a start of light emission (t2) of the light emission sections (24) to be caused to emit light to the light receiving timing (t3) of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3), and/or
the detector (8) controls the timing of light receiving (t3) so that, as the number of the light emission sections (24) to be caused to emit light decreases, the light receiving timing (t3') is delayed, so that a time from a start of light emission (t2) of the light emission sections (24) to be caused to emit light to the light receiving timing (t3') of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3').

3. The detection device (1) according to any one of claims 1 to 2,
wherein the detector (8) detects a distance from the detection device to the object to be detected by a time of flight.

4. A detection method for detecting an object to be detected comprising:
controlling light emission of a plurality of light emission sections (24), each light emission section (24) comprising a plurality of light emitting elements, included in a light emitting element array (20); and
detecting the object to be detected while controlling at least one of a supply timing (t1) of a drive current to the light emissions sections (24) to be caused to emit light and a light receiving timing (t3) of a plurality of light receiving elements included in a light receiving element array (5),
wherein when an amount of light emitted by each light emission sections (24) to be caused to emit light is maintained to be unchanged, regardless of a change in number of the light emission sections (24) to be caused to emit light, either
the supply timing (t1) is controlled so that as the number of the light emission sections (24) to be caused to emit light increases, the supply timing (t1') is advanced, so that a time from a start of light emission (t2) of the light emission sections (24) to be caused to emit light to the light receiving timing (t3) of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3), and/or
the light receiving timing (t3) is controlled so that as the number of the light emission sections (24) to be caused to emit light increases, the light receiving timing (t3') is delayed, so that a time from a start of light emission (t2) of the light emission sections (24) to be caused to emit light to the light receiving timing (t3') of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3').

5. A detection method for detecting an object to be detected comprising:
controlling light emission of a plurality of light emission sections (24), each light emission section (24) comprising a plurality of light emitting elements included in a light emitting element array (20); and
detecting the object to be detected while controlling at least one of a supply timing (t1) of a drive current to the light emission sections (24) to be caused to emit light and a light receiving timing (t3) of light receiving elements included in a light receiving element array (5),
wherein when a total amount of light emitted by the light emission sections (24) to be caused to emit light is maintained to be unchanged, regardless of a change in number of the light emission sections (24) to be caused to emit light, at least one of the supply timing (t1) and the light receiving timing (t3), which are determined based on an inductance of a current path for a drive current which flows through the light emission sections (24) to be caused to emit light, are controlled, wherein either
the supply timing (t1) is controlled so that as the number of the light emission sections(24) to be caused to emit light decreases, the supply timing (t1') is advanced, so that a time from a start of light emission (t2) of the light emissions sections (24) to be caused to emit light to the light receiving timing (t3) of the light receiving elements falls within a predetermined range even when a change occurs in an arrangement of the light emission sections (24) to be caused to emit light, so that change is prevented in the time from the light emission start (t2) of the light emission sections (24) to the light receiving timing (t3), and/or
the timing of light receiving is controlled so that as the number of the light emission sections (24) to be caused to emit light decreases, the light receiving timing (t3') is delayed, so that a time from a start of light emission (t2) of the light emission sections (24) to be caused to emit light to the light receiving timing (t3') of the light receiving elements falls within a predetermined range even when a change occurs in an arrangement of the light emission sections (24) to be caused to emit light. light, so that change is prevented in the time from the light emission start (t2) of the light emission sections (24) to the light receiving timing (t3').

6. A detection program which, when executed by the processor of the detection device of claim 1, causes the detection device to perform the detection method of claim 4.

7. A detection program which, when executed by the processor of the detection device of claim 2, causes the detection device to perform the detection method of claim 5.

8. A storage medium storing a detection program according to claim 6 or 7.

## Patentansprüche

1. Detektionsvorrichtung (1), umfassend:
eine Lichtemissionselement-Anordnung (20), die mehrere Lichtemissionsabschnitte (24) enthält, wobei jeder Lichtemissionsabschnitt (24) mehrere Lichtemissionselemente umfasst;
eine Lichtempfangs-Elementanordnung (5), die mehrere Lichtempfangselemente enthält, die reflektiertes Licht von Licht, das von der Lichtemissionselement-Anordnung zu einem zu detektierenden Objekt emittiert wird, empfangen;
einen Treiber (50), der die Lichtemissionsabschnitte (24) ansteuert; und
einen Detektor (8), der das zu detektierende Objekt detektiert, wobei der Detektor einen Prozessor (12) aufweist, der so betreibbar ist, dass er mindestens einen von einem Versorgungszeitpunkt (t1) eines Ansteuerstroms zu den Lichtemissionsabschnitten (24), die veranlasst werden sollen, Licht zu emittieren, und einem Lichtempfangszeitpunkt (t3) der Lichtempfangselemente steuert,
wobei, wenn eine Menge an Licht, das von jedem Lichtemissionsabschnitt (24) emittiert wird, der veranlasst werden soll, Licht zu emittieren, unabhängig von einer Änderung von Anzahl der Lichtemissionsabschnitte (24), die veranlasst werden sollen, Licht zu emittieren, unverändert beibehalten wird, entweder
der Detektor (8) den Versorgungszeitpunkt (t1) so steuert, dass, wenn die Anzahl der Lichtemissionsabschnitte (24), die veranlasst werden sollen, Licht zu emittieren, zunimmt, der Versorgungszeitpunkt (t1') so vorverlegt wird, dass eine Zeit von einem Start von Lichtemission (t2) der Lichtemissionsabschnitte (24), die veranlasst werden sollen, Licht zu emittieren, bis zu dem Lichtempfangszeitpunkt (t3) der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3) verhindert wird, und/oder
der Detektor (8) den Lichtempfangszeitpunkt (t3) so steuert, dass, wenn die Anzahl der Lichtemissionsabschnitte (24), die veranlasst werden sollen, Licht zu emittieren, zunimmt, der Lichtempfangszeitpunkt (t3') so verzögert wird, dass eine Zeit von einem Start von Lichtemission (t2) der Lichtemissionsabschnitte (24), die veranlasst werden sollen, Licht zu emittieren, bis zu dem Lichtempfangszeitpunkt (t3') der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3') verhindert wird.

2. Detektionsvorrichtung (1), umfassend:
eine Lichtemissionselement-Anordnung (20), die mehrere Lichtemissionsabschnitte (24) enthält, wobei jeder Lichtemissionsabschnitt (24) mehrere Lichtemissionselemente umfasst;
eine Lichtempfangs-Elementanordnung (5), die mehrere Lichtempfangselemente enthält, die reflektiertes Licht von Licht, das von der Lichtemissionselement-Anordnung zu einem zu detektierenden Objekt emittiert wird, empfangen;
einen Treiber (50), der die Lichtemissionsabschnitte (24) ansteuert; und
einen Detektor (8), der das zu detektierende Objekt detektiert, wobei der Detektor einen Prozessor (12) aufweist, der so betreibbar ist, dass er mindestens einen von einem Versorgungszeitpunkt (t1) eines Ansteuerstroms zu den Lichtemissionsabschnitten (24), die veranlasst werden sollen, Licht zu emittieren, und einem Lichtempfangszeitpunkt (t3) der Lichtempfangselemente steuert,
wobei, wenn eine Gesamtmenge an Licht, das von den Lichtemissionsabschnitten (24) emittiert wird, die veranlasst werden sollen, Licht zu emittieren, unabhängig von einer Änderung von Anzahl der Lichtemissionsabschnitte (2), die veranlasst werden sollen, Licht zu emittieren, unverändert beibehalten wird, der Detektor (8) mindestens einen von dem Versorgungszeitpunkt (t1) und dem Lichtempfangszeitpunkt (t3) steuert, die auf der Grundlage einer Induktivität eines Stromwegs für einen Ansteuerstrom bestimmt werden, der durch die Lichtemissionsabschnitte (24) fließt, die veranlasst werden sollen, Licht zu emittieren,
wobei der Detektor (8) den Versorgungszeitpunkt (t1) so steuert, dass, wenn die Anzahl der Lichtemissionsabschnitte (24), die veranlasst werden sollen, Licht zu emittieren, abnimmt, der Versorgungszeitpunkt (t1') so vorverlegt wird, dass eine Zeit von einem Start von Lichtemission (t2) der Lichtemissionsabschnitte (24), die veranlasst werden sollen, Licht zu emittieren, bis zu dem Lichtempfangszeitpunkt (t3) der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3) verhindert wird, und/oder
der Detektor (8) den Zeitpunkt von Lichtempfang (t3) so steuert, dass, wenn die Anzahl der Lichtemissionsabschnitte (24), die veranlasst werden sollen, Licht zu emittieren, abnimmt, der Lichtempfangszeitpunkt (t3') so verzögert wird, dass eine Zeit von einem Start von Lichtemission (t2) der Lichtemissionsabschnitte (24), die veranlasst werden sollen, Licht zu emittieren, bis zu dem Lichtempfangszeitpunkt (t3') der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3') verhindert wird.

3. Detektionsvorrichtung (1) nach einem der Ansprüche 1 bis 2,
wobei der Detektor (8) einen Abstand von der Detektionsvorrichtung zu dem zu detektierenden Objekt durch eine Laufzeit detektiert.

4. Detektionsverfahren zum Detektieren eines zu detektierenden Objekts, umfassend:
Steuern von Lichtemission mehrerer Lichtemissionsabschnitte (24), wobei jeder Lichtemissionsabschnitt (24) mehrere Lichtemissionselemente umfasst, die in einer Lichtemissionselement-Anordnung (20) enthalten sind; und
Detektieren des zu detektierenden Objekts, während mindestens einer von einem Versorgungszeitpunkt (t1) eines Ansteuerstroms zu den Lichtemissionsabschnitten (24), die veranlasst werden sollen, Licht zu emittieren, und einem Lichtempfangszeitpunkt (t3) mehrerer Lichtempfangselemente, die in einer Lichtempfangs-Elementanordnung (5) enthalten sind, gesteuert wird,
wobei, wenn eine Menge an Licht, das von jedem Lichtemissionsabschnitt (24) emittiert wird, der veranlasst werden soll, Licht zu emittieren, unabhängig von einer Änderung von Anzahl der Lichtemissionsabschnitte (24), die veranlasst werden sollen, Licht zu emittieren, unverändert beibehalten wird, entweder
der Versorgungszeitpunkt (t1) so gesteuert wird, dass, wenn die Anzahl der Lichtemissionsabschnitte (24), die veranlasst werden sollen, Licht zu emittieren, zunimmt, der Versorgungszeitpunkt (t1') so vorverlegt wird, dass eine Zeit von einem Start von Lichtemission (t2) der Lichtemissionsabschnitte (24), die veranlasst werden sollen, Licht zu emittieren, bis zu dem Lichtempfangszeitpunkt (t3) der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3) verhindert wird, und/oder
der Lichtempfangszeitpunkt (t3) so gesteuert wird, dass, wenn die Anzahl der Lichtemissionsabschnitte (24), die veranlasst werden sollen, Licht zu emittieren, zunimmt, der Lichtempfangszeitpunkt (t3') so verzögert wird, dass eine Zeit von einem Start von Lichtemission (t2) der Lichtemissionsabschnitte (24), die veranlasst werden sollen, Licht zu emittieren, bis zu dem Lichtempfangszeitpunkt (t3') der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3') verhindert wird.

5. Detektionsverfahren zum Detektieren eines zu detektierenden Objekts, umfassend:
Steuern von Lichtemission mehrerer Lichtemissionsabschnitte (24), wobei jeder Lichtemissionsabschnitt (24) mehrere Lichtemissionselemente umfasst, die in einer Lichtemissionselement-Anordnung (20) enthalten sind; und
Detektieren des zu detektierenden Objekts, während mindestens einer von einem Versorgungszeitpunkt (t1) eines Ansteuerstroms zu den Lichtemissionsabschnitten (24), die veranlasst werden sollen, Licht zu emittieren, und einem Lichtempfangszeitpunkt (t3) von Lichtempfangselementen, die in einer Lichtempfangs-Elementanordnung (5) enthalten sind, gesteuert wird,
wobei, wenn eine Gesamtmenge an Licht, das von den Lichtemissionsabschnitten (24) emittiert wird, die veranlasst werden sollen, Licht zu emittieren, unabhängig von einer Änderung von Anzahl der Lichtemissionsabschnitte (24), die veranlasst werden sollen, Licht zu emittieren, unverändert beibehalten wird, mindestens einer von dem Versorgungszeitpunkt (t1) und dem Lichtempfangszeitpunkt (t3), die auf der Grundlage einer Induktivität eines Stromwegs für einen Ansteuerstrom bestimmt werden, der durch die Lichtemissionsabschnitte (24) fließt, die veranlasst werden sollen, Licht zu emittieren, gesteuert werden, wobei entweder
der Versorgungszeitpunkt (t1) so gesteuert wird, dass, wenn die Anzahl der Lichtemissionsabschnitte (24), die veranlasst werden sollen, Licht zu emittieren, abnimmt, der Versorgungszeitpunkt (t1') so vorverlegt wird, dass eine Zeit von einem Start von Lichtemission (t2) der Lichtemissionsabschnitte (24), die veranlasst werden sollen, Licht zu emittieren, bis zu dem Lichtempfangszeitpunkt (t3) der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3) verhindert wird, und/oder
der Zeitpunkt von Lichtempfang so gesteuert wird, dass, wenn die Anzahl der Lichtemissionsabschnitte (24), die veranlasst werden sollen, Licht zu emittieren, abnimmt, der Lichtempfangszeitpunkt (t3') so verzögert wird, dass eine Zeit von einem Start von Lichtemission (t2) der Lichtemissionsabschnitte (24), die veranlasst werden sollen, Licht zu emittieren, bis zu dem Lichtempfangszeitpunkt (t3') der Lichtempfangselemente innerhalb eines vorbestimmten Bereichs liegt, selbst wenn eine Änderung in einer Anordnung der Lichtemissionsabschnitte (24), die veranlasst werden sollen, Licht zu emittieren, auftritt, so dass eine Änderung bezüglich der Zeit von dem Lichtemissionsstart (t2) der Lichtemissionsabschnitte (24) bis zu dem Lichtempfangszeitpunkt (t3') verhindert wird.

6. Detektionsprogramm, das, wenn es von dem Prozessor der Detektionsvorrichtung nach Anspruch 1 ausgeführt wird, die Detektionsvorrichtung veranlasst, das Detektionsverfahren nach Anspruch 4 durchzuführen.

7. Detektionsprogramm, das, wenn es von dem Prozessor der Detektionsvorrichtung nach Anspruch 2 ausgeführt wird, die Detektionsvorrichtung veranlasst, das Detektionsverfahren nach Anspruch 5 durchzuführen.

8. Speichermedium, das ein Detektionsprogramm nach Anspruch 6 oder 7 speichert.

## Revendications

1. Dispositif de détection (1) comprenant :
un réseau d'éléments émetteurs de lumière (20) incluant une pluralité de sections d'émission de lumière (24), chaque section d'émission de lumière (24) comprenant une pluralité d'éléments émetteurs de lumière ;
un réseau d'éléments récepteurs de lumière (5) incluant une pluralité d'éléments récepteurs de lumière qui reçoivent de la lumière réfléchie de la lumière émise par le réseau d'éléments émetteurs de lumière vers un objet à détecter ;
un circuit de commande (50) qui commande les sections d'émission de lumière (24) ; et
un détecteur (8) qui détecte l'objet à détecter, le détecteur comportant un processeur (12) apte à commander au moins l'un d'un instant de fourniture (t1) d'un courant d'entraînement vers les sections d'émission de lumière (24) destinées à émettre de la lumière et d'un instant de réception de lumière (t3) des éléments récepteurs de lumière,
dans lequel, lorsqu'une quantité de lumière émise par chaque section d'émission de lumière (24) destinée à émettre de la lumière est maintenue inchangée indépendamment d'une variation du nombre des sections d'émission de lumière (24) destinées à émettre de la lumière, soit
le détecteur (8) contrôle l'instant de fourniture (t1) de sorte que, à mesure que le nombre des sections d'émission de lumière (24) destinées à émettre de la lumière augmente, l'instant de fourniture (t1') soit avancée, de sorte qu'une durée entre un début d'émission de lumière (t2) des sections d'émission de lumière (24) destinées à émettre de la lumière et l'instant de réception de lumière (t3) des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3), et/ou
le détecteur (8) contrôle l'instant de réception de lumière (t3) de sorte que, à mesure que le nombre des sections d'émission de lumière (24) destinées à émettre de la lumière augmente, l'instant de réception de lumière (t3') soit retardée de sorte qu'une durée entre un début d'émission de lumière (t2) des sections d'émission de lumière (24) destinées à émettre de la lumière et l'instant de réception de lumière (t3') des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3').

2. Dispositif de détection (1) comprenant :
un réseau d'éléments émetteurs de lumière (20) incluant une pluralité de sections d'émission de lumière (24), chaque section d'émission de lumière (24) comprenant une pluralité d'éléments émetteurs de lumière ;
un réseau d'éléments récepteurs de lumière (5) incluant une pluralité d'éléments récepteurs de lumière qui reçoivent de la lumière réfléchie de la lumière émise par le réseau d'éléments émetteurs de lumière vers un objet à détecter ;
un circuit de commande (50) qui commande les sections d'émission de lumière (24) ; et
un détecteur (8) qui détecte l'objet à détecter, le détecteur comportant un processeur (12) apte à commander au moins l'un d'un instant de fourniture (t1) d'un courant d'entraînement vers les sections d'émission de lumière (24) destinées à émettre de la lumière et d'un instant de réception de lumière (t3) des éléments récepteurs de lumière, dans lequel lorsqu'une quantité totale de lumière émise par les sections d'émission de lumière (24) destinées à émettre de la lumière est maintenue inchangée,
indépendamment d'une variation du nombre des sections d'émission de lumière (2) destinées à émettre de la lumière, le détecteur (8) contrôle au moins l'un de l'instant de fourniture (t1) et de l'instant de réception de lumière (t3) qui sont déterminés sur la base d'une inductance d'un chemin de courant pour un courant d'entraînement qui circule à travers les sections d'émission de lumière (24) destinées à émettre de la lumière,
dans lequel le détecteur (8) contrôle l'instant de fourniture (t1) de sorte que, à mesure que le nombre des sections d'émission de lumière (24) destinées à émettre de la lumière diminue, l'instant de fourniture (t1') soit avancée, de sorte qu'une durée entre un début d'émission de lumière (t2) des sections d'émission de lumière (24) destinées à émettre de la lumière et l'instant de réception de lumière (t3) des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3), et/ou
le détecteur (8) contrôle l'instant de réception de lumière (t3) de sorte que, à mesure que le nombre des sections d'émission de lumière (24) destinées à émettre de la lumière diminue, l'instant de réception de lumière (t3') soit retardée, de sorte qu'une durée entre un début d'émission de lumière (t2) des sections d'émission de lumière (24) destinées à émettre de la lumière et l'instant de réception de lumière (t3') des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3').

3. Dispositif de détection (1) selon l'une quelconque des revendications 1 à 2,
dans lequel le détecteur (8) détecte une distance entre le dispositif de détection et l'objet à détecter par un temps de vol.

4. Procédé de détection pour détecter un objet à détecter comprenant :
contrôler l'émission de lumière d'une pluralité de sections d'émission de lumière (24), chaque section d'émission de lumière (24) comprenant une pluralité d'éléments émetteurs de lumière, inclus dans un réseau d'éléments émetteurs de lumière (20) ; et
détecter l'objet à détecter tout en contrôlant au moins l'un d'un instant de fourniture (t1) d'un courant d'entraînement vers les sections d'émission de lumière (24) destinées à émettre de la lumière et d'un instant de réception de lumière (t3) d'une pluralité d'éléments récepteurs de lumière inclus dans un réseau d'éléments récepteurs de lumière (5),
dans lequel lorsqu'une quantité de lumière émise par chaque section d'émission de lumière (24) destinée à émettre de la lumière est maintenue inchangée,
indépendamment d'une variation du nombre des sections d'émission de lumière (24) destinées à émettre de la lumière, soit
l'instant de fourniture (t1) est contrôlée de sorte que, à mesure que le nombre des sections d'émission de lumière (24) destinées à émettre de la lumière augmente, l'instant de fourniture (t1') soit avancée, de sorte qu'une durée entre un début d'émission de lumière (t2) des sections d'émission de lumière (24) destinées à émettre de la lumière et l'instant de réception de lumière (t3) des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3), et/ou
l'instant de réception de lumière (t3) est contrôlée de sorte que, à mesure que le nombre des sections d'émission de lumière (24) destinées à émettre de la lumière augmente, l'instant de réception de lumière (t3') soit retardée, de sorte qu'une durée entre un début d'émission de lumière (t2) des sections d'émission de lumière (24) destinées à émettre de la lumière et l'instant de réception de lumière (t3') des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3').

5. Procédé de détection pour détecter un objet à détecter comprenant :
contrôler l'émission de lumière d'une pluralité de sections d'émission de lumière (24), chaque section d'émission de lumière (24) comprenant une pluralité d'éléments émetteurs de lumière, inclus dans un réseau d'éléments émetteurs de lumière (20) ; et
détecter l'objet à détecter tout en contrôlant au moins l'un d'un instant de fourniture (t1) d'un courant d'entraînement vers les sections d'émission de lumière (24) destinées à émettre de la lumière et d'un instant de réception de lumière (t3) d'éléments récepteurs de lumière inclus dans un réseau d'éléments récepteurs de lumière (5),
dans lequel lorsqu'une quantité totale de lumière émise par les sections d'émission de lumière (24) destinées à émettre de la lumière est maintenue inchangée, indépendamment d'une variation du nombre des sections d'émission de lumière (24) destinées à émettre de la lumière, au moins l'un de l'instant de fourniture (t1) et de l'instant de réception de lumière (t3), qui sont déterminés sur la base d'une inductance d'un chemin de courant pour un courant d'entraînement qui circule à travers les sections d'émission de lumière (24) destinées à émettre de la lumière, sont contrôlés, dans lequel soit
l'instant de fourniture (t1) est contrôlée de sorte que, à mesure que le nombre des sections d'émission de lumière (24) destinées à émettre de la lumière diminue, l'instant de fourniture (t1') soit avancée, de sorte qu'une durée entre un début d'émission de lumière (t2) des sections d'émission de lumière (24) destinées à émettre de la lumière et l'instant de réception de lumière (t3) des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3), et/ou
l'instant de réception de lumière est contrôlée de sorte que, à mesure que le nombre des sections d'émission de lumière (24) destinées à émettre de la lumière diminue, l'instant de réception de lumière (t3') soit retardée, de sorte qu'une durée entre un début d'émission de lumière (t2) des sections d'émission de lumière (24) destinées à émettre de la lumière et l'instant de réception de lumière (t3') des éléments récepteurs de lumière se situe dans une plage prédéterminée même lorsqu'une modification se produit dans une disposition des sections d'émission de lumière (24) destinées à émettre de la lumière, de sorte qu'une modification soit empêché dans la durée entre le début d'émission de lumière (t2) des sections d'émission de lumière (24) et l'instant de réception de lumière (t3').

6. Programme de détection qui, lorsqu'il est exécuté par le processeur du dispositif de détection selon la revendication 1, amène le dispositif de détection à effectuer le procédé de détection selon la revendication 4.

7. Programme de détection qui, lorsqu'il est exécuté par le processeur du dispositif de détection selon la revendication 2, amène le dispositif de détection à effectuer le procédé de détection selon la revendication 5.

8. Support de stockage stockant un programme de détection selon la revendication 6 ou la revendication 7.
